**Europäisches Patentamt**

**European Patent Office**

**Office européen des brevets**

(11) Veröffentlichungsnummer: **0 008 443**
**A2**

(12) # EUROPÄISCHE PATENTANMELDUNG

(21) Anmeldenummer: **79102992.9**

(22) Anmeldetag: **16.08.79**

(51) Int. Cl.³: **F 03 G 7/06**

(30) Priorität: **18.08.78 DE 2836253**

(43) Veröffentlichungstag der Anmeldung:
**05.03.80 Patentblatt 80/5**

(84) Benannte Vertragsstaaten:
**IT**

(71) Anmelder: **Hahn, Bernd**
**Ackermannstrasse 1**
**D-8000 München 40(DE)**

(72) Erfinder: **Hahn, Bernd**
**Ackermannstrasse 1**
**D-8000 München 40(DE)**

(74) Vertreter: **Diehl, Hermann O. Th., Dr.**
**Flüggenstrasse 17**
**D-8000 München 19(DE)**

(54) **Vorrichtung zur Umwandlung von Wärme in mechanische Energie.**

(57) Vorrichtung zur Umwandlung von Wärme in mechanische Energie, mit einem Thermo-Bimetall-Elemente enthaltenden Rotor, dessen Achse senkrecht zu einer Kraftkomponente eines Gravitationsfeldes angeordnet ist, wobei die Bimetall-Elemente in einem Bereich des Rotors durch umzuwandelnde Wärme in einer Richtung verformt werden.
Der Rotor Enthält von der Drehachse abstehende speichen- oder stabartige Elemente, die in Ebenen liegen, welche die Drehachse des Rotors enthalten, und daß die speichen- oder stabartigen Elemente in zumindest einem Längsstück aus Thermo-Bimetall-Elementen bestehen.

./...

EP 0 008 443 A2

FIG.16

0008443

PATENTANWALT·DR. HERMANN O. TH. DIEHL·DIPLOMPHYSIKER
D-8000 MÜNCHEN 19 - FLÜGGENSTRASSE 17 - TELEFON: 089/17 70 61

Anmelder:

Bernd Hahn

8000 München 40

---

Vorrichtung zur Umwandlung von Wärme in mechanische Energie

---

Die Erfindung betrifft eine Vorrichtung zur Umwandlung
von Wärme in mechanische Energie, mit einem Thermo-Bimetalle
enthaltenden Rotor, dessen Achse senkrecht zu einer Kraftkomponente eines Gravitationsfeldes angeordnet ist, wobei
die Bimetall-Elemente in einem Bereich des Rotors durch
umzuwandelnde Wärme in einer Richtung verformt und in einem
zweiten Bereich durch Abkühlen in Gegenrichtung verformt
werden.

Eine derartige Vorrichtung, bei der eine Drehkraft durch
Verlagerung von Gewichtsteilen unter Wärmeeinwirkung erzeugt werden muß, ist in der DE-PS 549 167 beschrieben.
Diese Vorrichtung kann jedoch nur geringe Kräfte überwinden
und ist nicht als Antriebsmotor geeignet. Auch die DE-OS
26 12 280, die DT-OS 22 39 241 und die FR-PS 83 70 73 beschreiben Verfahren und Vorrichtungen zum Umsetzen von Energie in
mechanische Energie, die jedoch entweder sehr kompliziert

Postscheckkonto München Nr. 948 54-8.    Reuschelbank München (BLZ 700 303 00) Konto Nr. 423 11343
Telex 5215145 Zeus    Telegrammadresse Cable Adress: Zeuspatent

sind, oder lediglich als Spielzeug dekorationsfähige Reklameträger verwendet werden können, da sie mit einem sehr geringen Wirkungsgrad arbeiten.

Der vorliegenden Erfindung liegt die Aufgabe zugrunde, eine Vorrichtung zur direkten Umwandlung von Wärme in mechanische Energie zu schaffen, die einfach aufgebaut und als Arbeitsmaschine geeignet ist. Diese Aufgabe wird erfindungsgemäß dadurch gelöst, daß der Rotor von der Drehachse abstehende speichen- oder stabartige Elemente enthält, die in Ebenen liegen, welche die Drehachse des Rotors enthalten und daß die speichen- oder stabartigen Elemente in zumindest einem Längsstück aus Thermo-Bimetall-Elementen bestehen. Gemäß einer weiteren Lösung dieses Problems sind die Thermo-Bimetall-Elemente am äußeren Umfange des Rotors derart angeordnet, daß sie in Ebenen liegen, welche die Drehachse enthalten, wobei ihre freien Enden bei Temperaturänderungen durch die Wärmezu- bzw. -abfuhr eine bezüglich der Drehachse radiale und/oder tangentiale Verschiebung erfahren.

Die Erfindung beruht auf der Erkenntnis, daß durch Erwärmen bzw.
Abkühlen von bezügl. einer Drehachse im wesentlichen diametral
aneinander gegenüberliegenden und nicht mit der Richtung der
Kraftkomponente des Gravitationsfeldes fluchtenden Bereichen,
d.h. durch Erzeugung einer Temperaturdifferenz zwischen bezogen
auf die Drehachse entgegengesetzten Bereichen, Massenverschiebungen erzielt werden, die bei ortsfest gelagerter Drehachse
ein Drehmoment um diese erzeugen.

Unter der Bezeichnung "Massenverdichtung bzw. Massenverdünnung"
wird hierbei verstanden, daß sich die bei Temperaturgleichgewicht in dem als Rotor wirkenden Körpers einstellende Massenverteilung, durch deren Schwerpunkt dann die Drehachse    hindurchgeht, lokal dahingehend verändert, daß in speziellen Sektoren
um die Drehachse eine höhere Massenbelegung, in anderen eine
geringere Massenbelegung herrscht. Unter der Bezeichnung "Massenanhebung bzw. Massenabsenkung" wird verstanden, daß in einem
bestimmten Sektorbereich die Massenbelegung in radialer Richtung
von der Drehachse hinweg oder zu der Drehachse hin verschoben
wird.

Wesentlicher Vorteil der Erfindung ist die Erzielung eines
hohen Wirkungsgrades bei der Umwandlung von Wärmeenergie in
mechanische Energie, welche nicht nur einen Antrieb von Mobiles
sondern auch von Arbeitsmaschinen ermöglicht,  wodurch herkömmliche Antriebssysteme ersetzt werden können. Insbesondere im
Zusammenhang mit der Verwertung von Sonnenenergie ergeben sich
vielfältige Anwendungsmöglichkeiten. Als einfachstes Beispiel
hierfür sei ein Antrieb von Ventilatoren und Pumpen in Heizungs-
und Belüftungskreisläufen genannt, sowie ein Antrieb von Schöpfrädern, bei denen der in das Wasser eintauchende Teil die Wärmesenke, der der Sonne ausgesetzte Teil die Wärmequelle bilden
können. Von besonderer Wichtigkeit ist, daß diese Antriebe ohne
einen Antransport von Brennstoffen oder eine Zuführung elektrischer Leitungen beispielsweise in abgelegenen Wüstengebieten
zur Bewässerung betrieben werden können. Neben der Verwendung als
stationäre Antriebsquellen ist jedoch auch an eine Verwendung
im Schiff- , Fahrzeug- und Flugzeugbau gedacht. In Wärmekraftwerken oder bei der Ausnutzung geodätischer Wärmequellen kann
ein Einsatz zur Stromerzeugung erfolgen, wobei der besondere
Vorteil darin zu sehen ist, daß eine wirksame Ausnutzung auch
von geringeren Temperaturdifferenzen zwischen Wärmequelle und
Wärmesenke möglich ist, bei denen herkömmliche Systeme noch
äußerst unwirtschaftlich arbeiten. Während zu einem Einsatz bei
mobileartigen "Sonnenrädern" bereits geringste Temperatur
für eine Drehung ausreichen, wird man im allgemeinen versuchen,
bei einem Einsatz als Arbeitsmaschine mit Temperaturdifferenzen
zwischen etwa 5o bis etwa 1000°C, vorzugsweise bis 350°C zu
arbeiten.

Die Energiezuführung bzw. Energieableitung kann sowohl über
Strahlungsaustausch, als auch über Medienaustausch, d.h.
mittels geeigneter direkt mit den drehbar gelagerten Körpern
in Wärmeaustausch tretenden Wärmeübertragungsfluiden erfolgen,
beispielsweise mittels Gasen oder Flüssigkeiten.

Im folgenden werden besonders vorteilhafte Weiterbildungen
und technische Ausgestaltungen der Erfindung erläutert.

Unter der Bezeichnung Thermo-Bimetalle werden im Zuge der vorliegenden Anmeldung Verbundwerkstoffe aus mehreren, vorzugsweise,
jedoch nicht notwendigerweise zwei Metallen mit unterschiedlichen
thermischen Ausdehnungskoeffizienten verstanden, die streifen-
oder stabförmig ausgebildet sind. Die Herstellung und der Aufbau
der Thermo-Bimetalle selbst ist nicht Gegenstand dieser Anmeldung.

Anstelle von Thermo-Bimetallen können auch sog.Memory-Metalle sowie nicht metallische Werkstoffe, vorzugsweise Verbundwerkstoffe, aus anderen Materialien und gegebenenfalls Metallen mit unterschiedlichen thermischen Ausdehnungsvermögen verwendet werden. Diese sollen daher ebenfalls unter der Bezeichnung Thermo-Bimetalle verstanden werden.

Wenn die Wärmeübertragung auf den Rotor oder von diesem mittels eines Wärmeübertragungsfluids durchgeführt wird, besteht die Möglichkeit, dieses im offenen Kreislauf an dem Rotor vorbeizuführen, was besonders dann bevorzugt ist, wenn Luft, ein erhitztes Gas oder ein an einem Verbrennungsprozeß teilgenommenes Gas als Fluid verwendet wird. Das Fluid kann jedoch auch in einem geschlossenen Kreislauf geführt werden, was insbesondere dann der Fall ist, wenn teuere, vorzugsweise indirekt erhitzte Wärmeübertragungsfluide mit einer großen thermischen Kapazität verwendet sind.

Der Rotor wird mit Vorteil an zwei im wesentlichen diametral zueinander liegenden Bereichen in Richtung seiner Längsachse oder quer zu derselben be- und/oder durchspült. Wenn der Rotor von zwei gleichgerichteten Fluidströmen, einem warmen und einem kalten in Richtung seiner Längsachse beaufschlagt ist, kann die dem Fluid innewohnende Bewegungsenergie bei entsprechender Ausbildung des drehbaren Körpers ebenfalls zur Erzeugung eines Drehmoments beitragen.

Wenn für die Kühlung und das Erwärmen des Rotors das gleiche
Fluid verwendet werden soll, empfiehlt es sich den Rotor mit
zwei gegensinnig verlaufenden Fluidströmen zu beaufschlagen,
insbesondere auch dann, wenn diese Beaufschlagung quer zur
Längsachse erfolgt, da auch hierbei die Bewegungsenergie des
Fluids für eine Turbinenwirkung ausgenutzt werden kann. Die
beim Abkühlen des Rotors entzogene Energie wird vorzugsweise
zumindest teilweise wieder zurückgewonnen, wobei im Gegensatz
zu den herkömmlichen Verfahren die gewonnene Abwärme ohne Umformung in eine andere Energieform, d.h. ohne große Verluste
wieder der Antriebsseite zugeführt werden kann.In diesem Zusammenhang ist es besonders günstig, wenn zum Erwärmen und/oder
Abkühlen eine Wärmepumpe verwendet wird, die auch direkt von
der Drehung des Rotors angetrieben werden kann.
Ein Umkehren der Drehrichtung läßt sich in einfacher Weise dadurch erreichen, daß man die Energiezuführung zu dem Rotor
und die Energieabfuhr von diesem umpolt, d.h. daß man Wärmequelle und Wärmesenke gegeneinander vertauscht.

Von den vielfältigen Möglichkeiten einen Bereich des drehbaren
Körpers zu erwärmen, seien neben der Sonnenenergie besonders die
Ausnützung des Peltiereffekts genannt, wobei sich ein hoher
Wirkungsgrad des Peltierelementes dadurch erreichen läßt, daß
auch die Abwärme wieder zurückgeführt werden kann und als solche
nicht verloren geht. Weitere Möglichkeiten sind das Erwärmen
mittels ohmscher und/oder induktiver Wärme, wobei der Körper
selbst von elektrischen Strömen durchflossen sein kann.

Wenn das zur Erwärmung verwendete Fluid an einem Verbrennungsvorgang teilnimmt oder ein Produkt des Verwendungsvorganges ist,
erhält man einen neuartigen und einfachen Verbrennungsmotor.

Es ist schließlich besonders günstig, wenn die Wärmeübertragung von dem Körper oder auf diesen möglichst nahe an dessen Drehachse erfolgt, weil hierdurch alle außerhalb liegenden Bereiche an der Massenverschiebung teilnehmen und daher zu der Erzeugung des Drehmoments beitragen.

Bei der ersten Ausführungsform des Rotors werden Thermo-Bimetall-Elemente vorzugsweise so angeordnet, daß die Trennflächen zwischen den beiden Schichten unterschiedlicher thermischer Ausdehnung parallel oder quer zur Drehachse verlaufen, wobei im zuletzt genannten Falle die Trennfläche vorzugsweise im temperaturneutralen Zustand senkrecht zur Drehachse angeordnet ist. Die speichen- oder stabartigen Elemente stehen zweckmäßigerweise in radialer Richtung von der Drehachse ab, da damit ein optimaler Einfluß bezüglich der Erzeugung des Drehmoments um diese Achse bewirkt wird. Es ist auch möglich, die Thermo-Bimetall-Elemente so auszubilden, daß in ihnen die beiden Schichten unterschiedlicher thermischer Ausdehnung in sich verdreht sind, vorzugsweise um $90^{\circ}$. Die Trennflächen zwischen den beiden Schichten unterschiedlicher thermischer Ausdehnung in den Thermo-Bimetall-Elementen liegen dabei zweckmäßigerweise in achsnahen Gebieten der Ebenen, welche die Drehachse enthalten.

Bei der zweiten beschriebenen Ausführungsform sind die Thermo-Bimetall-Elemente zweckmäßigerweise in ihrem Mittelbereich am äußeren Umfang des Rotors parallel zur Drehachse befestigt. Die Trennflächen zwischen den beiden Schichten unterschiedlicher thermischer Ausdehnung in den Thermo-Bimetall-Elementen bzw. die Biegeebenen in den Memory-Metallen liegen vorzugsweise in Ebenen, die parallel zur Drehachse verlaufen, wenn die Thermo-Bimetall-Elemente ihre neutrale Lage einnehmen. Diese Ebenen enthalten mit Vorteil die Drehachse. Bekannte Bimetall-Elemente sind zweckmäßigerweise Längsstreifen, da man in diesen Fällen mit einem geringen Materialaufwand auskommt. Gemäß einer weiteren Ausgestaltung sind Thermo-Bimetall-Elemente in Form von Schlitzscheiben oder Sternanordnungen ausgebildet, die mit Vorteil drei sektorenartige Bereiche enthalten, die sich von einer gemeinsamen Nabe aus erstrecken. Auch in diesem Falle können die Trennflächen zwischen den beiden Schichten unterschiedlicher thermischer
Ausdehnung in sich verdreht sein.

Als günstig hat es sich erwiesen, wenn die Trennflächen zwischen den beiden Schichten unterschiedlicher thermischer Ausdehnung im Bereich ihrer Befestigung am äußeren Umfang des
Rotors tangential zu diesem verlaufen.

Zur Erzielung größerer Drehmomente verwendet man mit Vorteil
eine Mehrzahl von Rotoren, die auf einer gemeinsamen längs zur
Drehachse verlaufenden Welle angeordnet sind. Die speichen-
oder stabartigen Elemente bzw. die Bimetall-Körper sind zweckmäßigerweise an ihren freien Enden mit Zusatzmassen versehen.

Man erhält einen guten Wirkungsgrad, wenn die Vorrichtung
eine Wärmequelle enthält, welche den Rotor in einem Bereich
erwärmt und eine Wärmesenke, welche den Rotor in einem anderen
Bereich abkühlt. Ferner ist der zumindest eine Rotor zweckmäßigerweise zumindest in dem für das Erwärmen versehenen Bereich von
einem wärmeisolierenden und vorzugsweise nach innen Wärme reflektierenden Gehäuse umgeben, in dem sich ein Wärmestau ausbilden kann und in dem oder über den dem Rotor die für seinen
Antrieb notwendige Wärme zugeführt wird. Bei kleineren Antriebsleistungen genügt es, wenn der zu kühlende Bereich des Rotors
im Freien liegt oder in ein kühles Medium eintaucht. Derartige
Ausgestaltungen eignen sich besonders als Mobile jedoch auch
als Schöpfräder oder Ventilatoren.

Es ist günstig, wenn die der bezweckten thermischen Ausdehnung
unterworfenen Bauelemente mit einer die Energieaufnahme und
-abgabe fördernden Oberfläche versehen, beispielsweise geschwärzt
sind.

Mit Vorteil wird das an den zu kühlenden Bereichen des Rotors vorbeigeführte Wärmeübertragungsfluid anschließend von einer Wärmequelle erhitzt und hierauf an den zu wärmenden Bereichen des Rotors vorbeigeleitet.

Bei einem Bau von Antriebsmaschinen ist es besonders günstig, wenn der zumindest eine Rotor in einem Gehäuse aufgenommen ist, das durch zumindest eine thermisch isolierende Trennwandung in eine Warmkammer und eine Kaltkammer untergeteilt ist. Die Trennwandung ist dabei so gestaltet, daß sie den Durchtritt der einzelnen Rotorbereiche von der Warmkammer in die Kaltkammer und umgekehrt ermöglicht, jedoch einen Temperaturausgleich zwischen den Kammern möglichst verhindert. Wenn der Rotor direkt mit den Wärmeübertragungsfluiden in Berührung treten soll, enthalten die Warmkammer und/oder die Kaltkammer Anschlüsse für die Zuführung und Abführung der entsprechenden Wärmeübertragungsfluide. Wenn die Wärmeübertragung dagegen mittels Strahlung vorgenommen wird, ist zumindest ein von einem Wärmeübertragungsfluid beaufschlagbarer Wärmetauscher den einzelnen speicher- oder stabartigen Elementen, zumindest in dem für die Erwärmung vorgesehenen Bereich stirnseitig gegenüberstehend angeordnet. Der Rotor kann mit Vorteil als Fördermittel für das zumindest eine Wärmeübertragungsfluid ausgebildet sein, oder Fördermittel für das zumindest eine Wärmeübertragungsfluid antreiben.

Man erhält einen besonders einfachen und wirkungsvollen Aufbau, wenn die Wärmequelle und/oder die Wäremesenke von dem warmen bzw. von dem kalten Bereich einer Wärmepumpe gebildet sind, welche direkt mittels ihres Wärmeübertragungsfluids oder über Wärmetauscher die Wärmezufuhr oder die Wärmeabfuhr bewirken. Die Wärmepumpe kann von dem Rotor selbst angetrieben sein.

Wo als Antriebsenergie elektrische Energie zur Verfügung steht, eignen sich für die Wärmequelle und für die Wärmesenke auch Peltierelemente. Bei einer besonders vorteilhaften Ausführungsform sind hierzu auf der Welle zumindest zwei Scheiben angebracht. Die Thermo-Bimetalle in den speichen- oder stabartigen Elementen je zweier längs der Achse aufeinander folgende Scheiben sind jeweils um 180$^{\circ}$ gegeneinander verdreht angebracht. In einem Bereich zwischen je zwei Scheiben ist zumindest ein Peltierelement derart angeordnet, daß seine klate Seite der einen, seine warme Seite der anderen Scheibe zugekehrt ist.

Die für den Antrieb der Vorrichtung benötigte Wärme kann auch durch offene Verbrennung mittels eines Brenners erzeugt werden, oder mittels zumindest einer an oder in jedem der einzelnen speichen- oder stabartigen Elemente angebrachte selektiv erregbare Heizspule, die vorzugsweise im Bereich der Thermo-Bimetalle angeordnet sind. Besonders bei größeren Geräten ist es vorteilhaft, wenn an der Welle zumindest eines Rotors ein Startmotor angebracht ist.

Bei einer besonders einfachen Ausgestaltung, die als "Sonnenrad" Verwendung findet, ist die eine Stirnfläche des speichen- oder stabartigen Elements mit einer strahlungsabsorbierenden und die andere Seitenfläche mit einer strahlungsreflektierenden Oberfläche versehen.

Weitere Einzelheiten und Vorteile der Erfindung ergeben sich
aus der folgenden Beschreibung bevorzugter Ausführungsbeispiele
anhand der beiliegenden Zeichnungen.

Fig. 1 zeigt in schematischer Darstellung die Erzeugung eines
Drehmoments durch eine thermisch bedingte Massenverlagerung in
Form einer Massenanhebung bzw. Massenabsenkung gegenüber der
Drehachse eines Körpers.

Fig. 2 zeigt in schematischer Darstellung die Erzeugung eines
Drehmoments durch eine thermisch bedingte Massenverlagerung in
Form einer Massenverdichtung und eine Massenverdünnung in einem
um eine Drehachse drehbaren Körper.

Die Figuren 3 bis 6 zeigen verschiedene Anordnungen von Wärmequelle und Wärmesenke zum Rotor, bei denen die Wärmezufuhr
bzw. die Wärmeabfuhr durch Strahlung vorgenommen ist.

Figur 7 und 8 zeigen schematisch zwei weitere Möglichkeiten
für eine Anordnung von Wärmequelle und Wärmesenke bei einer
Wärmeübertragung durch zumindest ein mit dem Rotor in direkten
Kontakt tretendes Wärmeübertragungsfluid.

Fig. 9 zeigt einen Längsschnitt durch einen direkt durch Wärmestrahlung und/oder Sonnenlicht angetriebenen Motor.

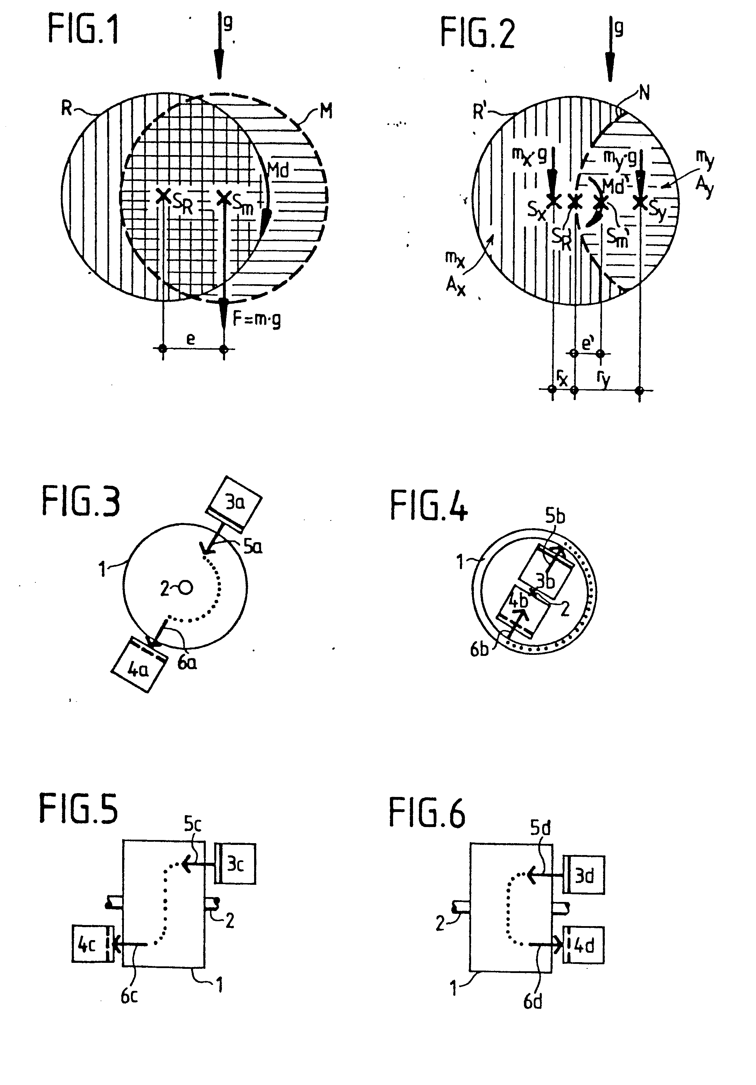

Fig. 1o zeigt einen schematischen Längsschnitt durch einen Energie-
Recycling-Verbrennungsmotor.

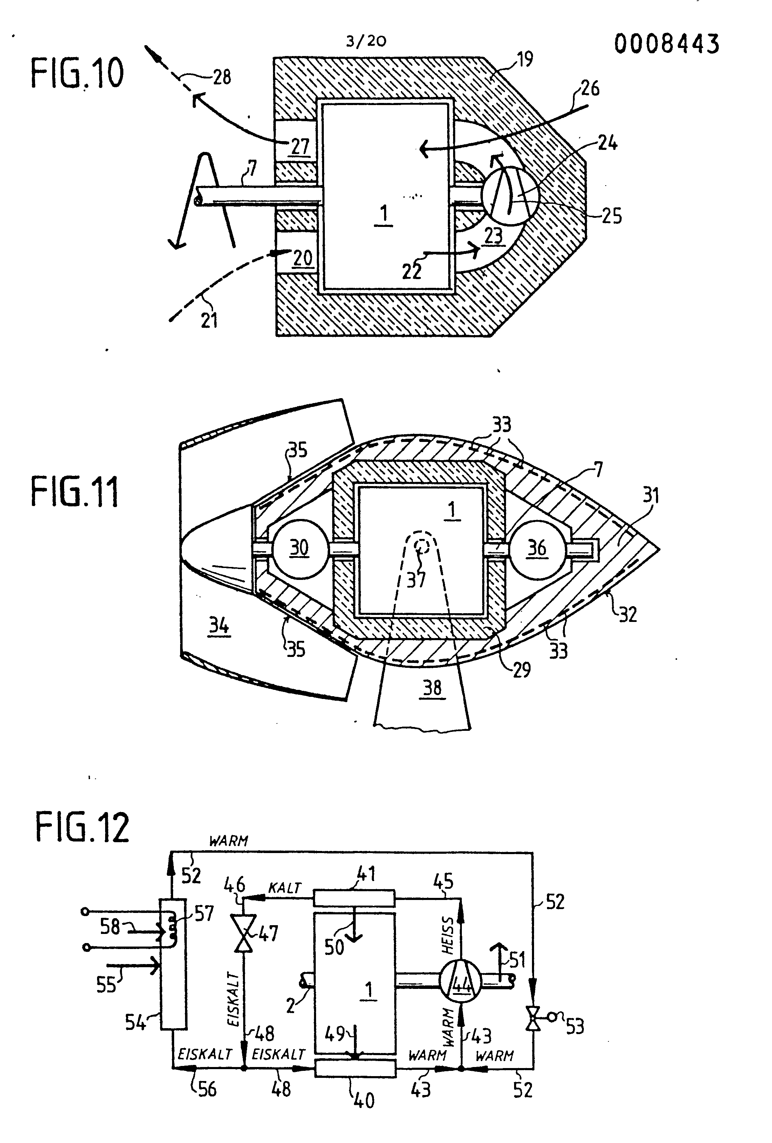

Fig. 11 zeigt einen schematischen Längsschnitt durch eine weitere
Ausführungsform eines Motors, bei dem die benötigte Temperaturdifferenz durch eine Wärmepumpe erzeugt wird.

Fig. 12 zeigt eine Schaltskizze für einen Energie-Recycling-Motor,
bei dem eine Wärmepumpe in den Kreislauf des Wärmeübertragungsfluids eingeschaltet ist.

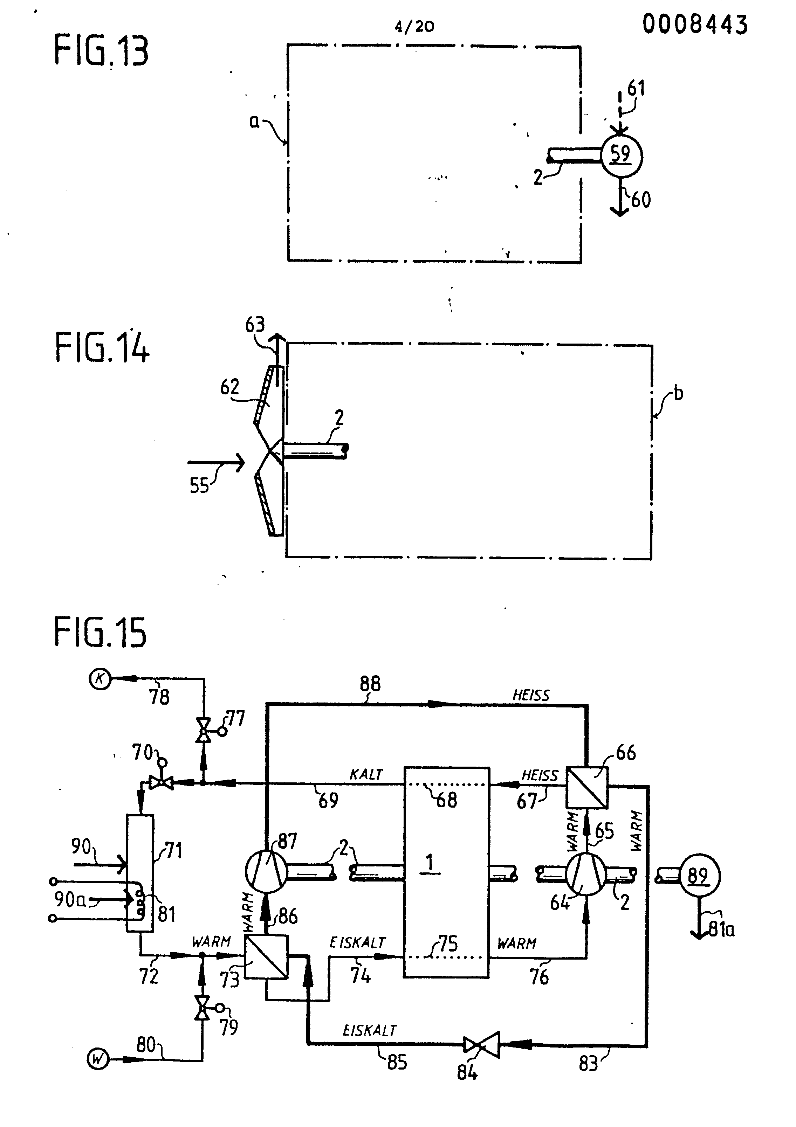

Fig. 13 zeigt eine Schaltskizze einer ähnlichen Anordnung wie von
Fig. 12, bei der mit der Motorwelle zusätzlich ein Generator/Motor
verbunden ist, wobei zur Vermeidung von Wiederholungen die Schaltung von Fig. 12 lediglich durch ein Kästchen angedeutet ist.

Fig. 14 zeigt eine Schaltskizze einer ähnlichen Anordnung wie von
Fig. 13, bei der zusätzlich ein rotierender Fluidbeschleuniger mit
der Motorwelle verbunden ist, der gleichzeitig die Aufgabe hat,
einen Eiskristallansatz am Wärmetauscher zu verhindern, wobei zur
Vermeidung von Wiederholungen die Schaltung von Fig. 13 lediglich
durch ein Kästchen angedeutet ist.

Fig. 15 zeigt eine Schaltung ähnlich zu derjenigen von Fig. 13,
bei der jedoch der Rotor von einem Wärmeübertragungsfluid direkt
beaufschlagt wird, wobei das Wärmeübertragungsfluid über Gegenstromwärmetauscher mit dem Wärmepumpenkreislauf in Wärmeaustausch
steht.

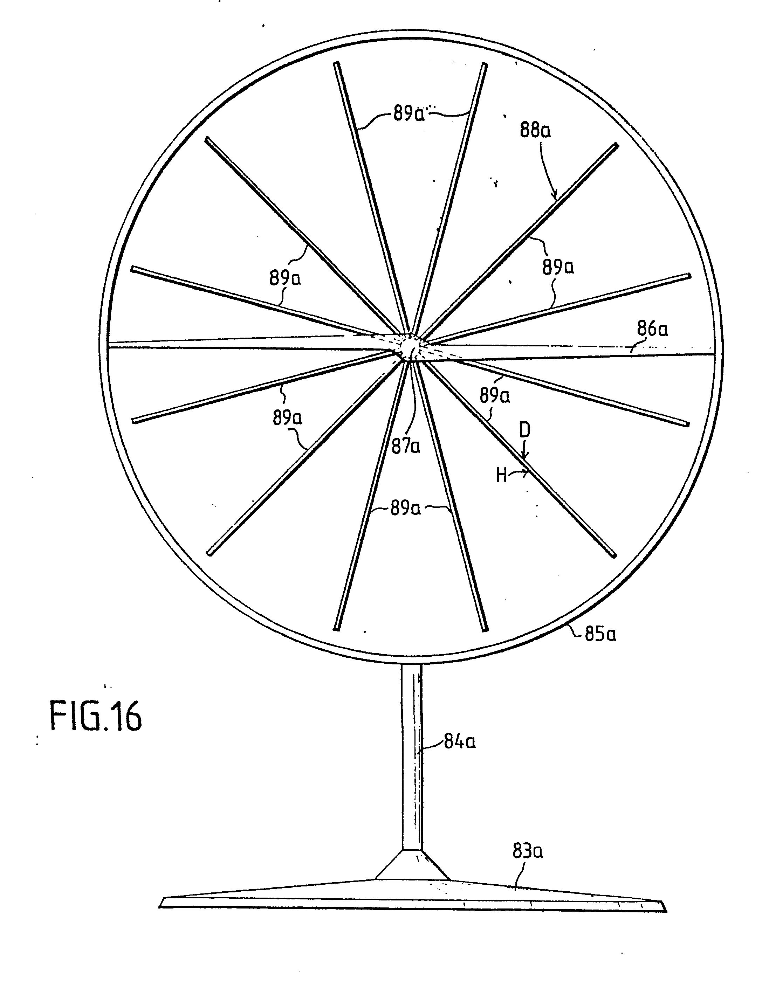

Fig. 16 zeigt ein Beispiel eines "Sonnenrades" als kinetisches
Mobile.

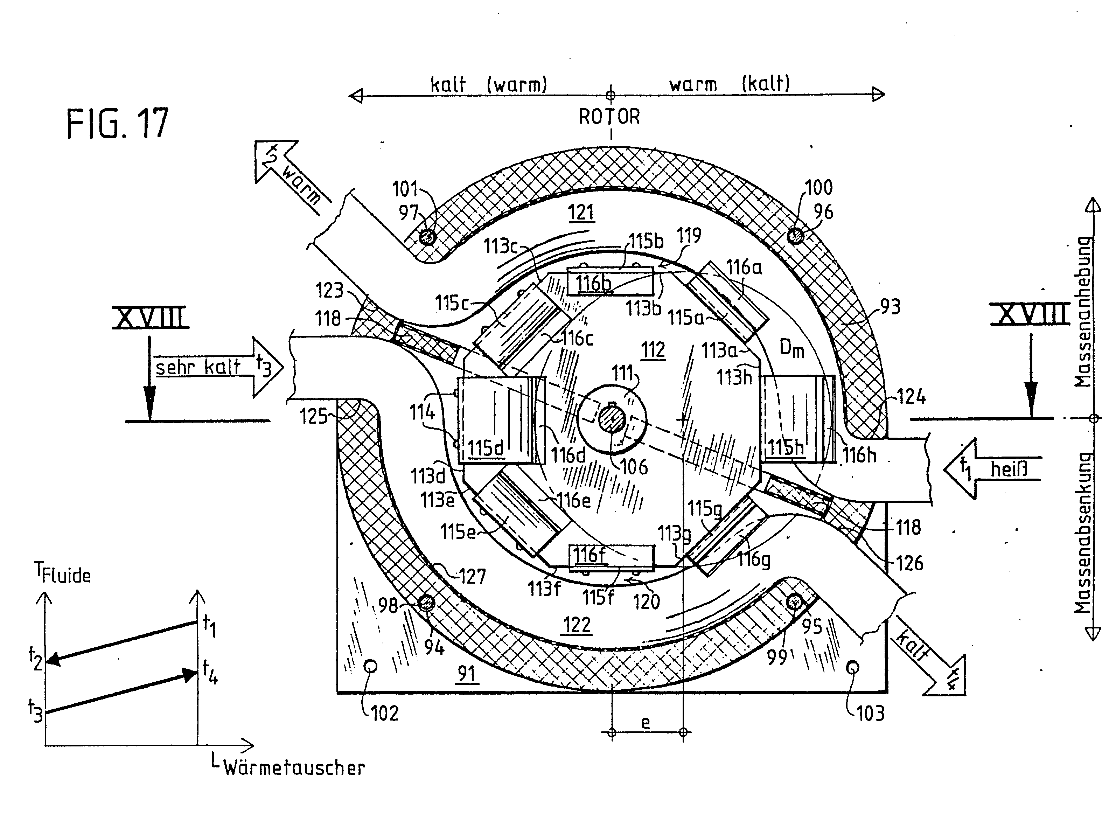

Fig. 17 zeigt eine teilgeschnittene Vorderansicht von einem
Ausführungsbeispiel eines Motors, bei dem mittels einer über
entsprechende Wärmetauscher hervorgerufenen Temperaturdifferenz eine Massenanhebung und eine Massenabsenkung gegenüber der
Welle vorgenommen werden.

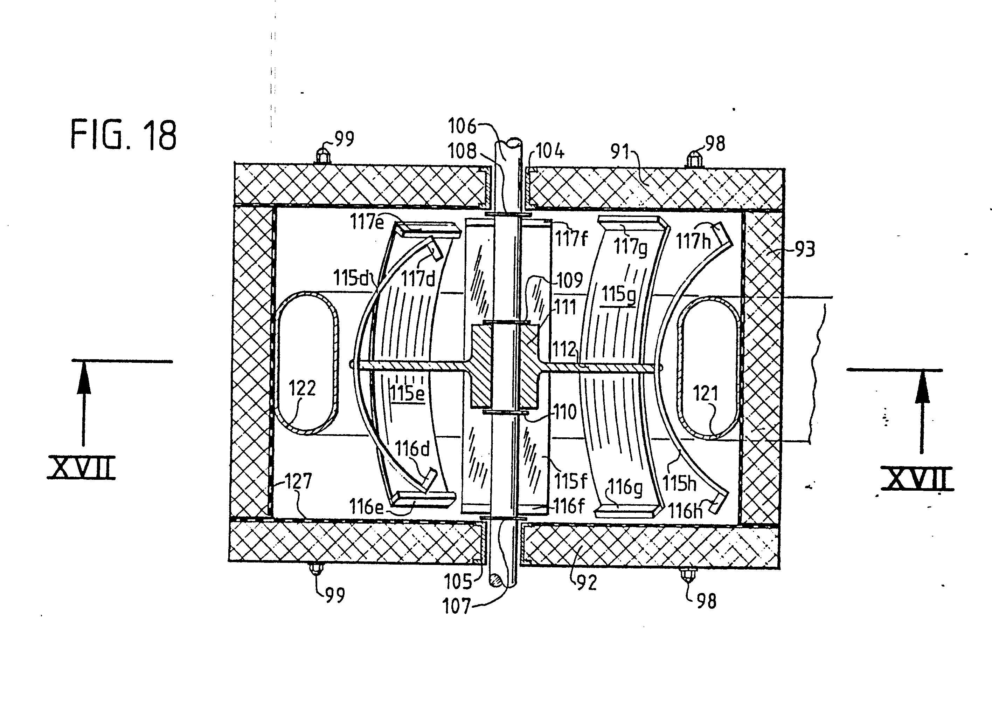

Fig. 18 zeigt einen Schnitt längs der Linie XVIII – XVIII von
Fig. 17.

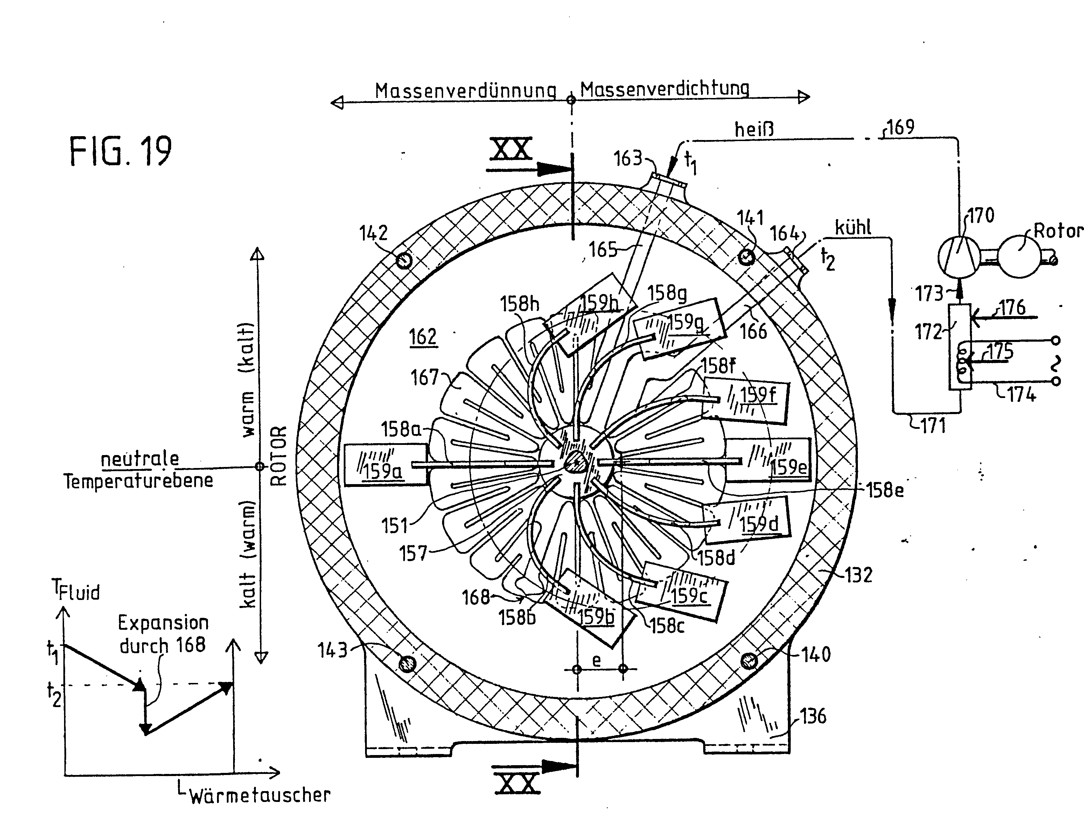

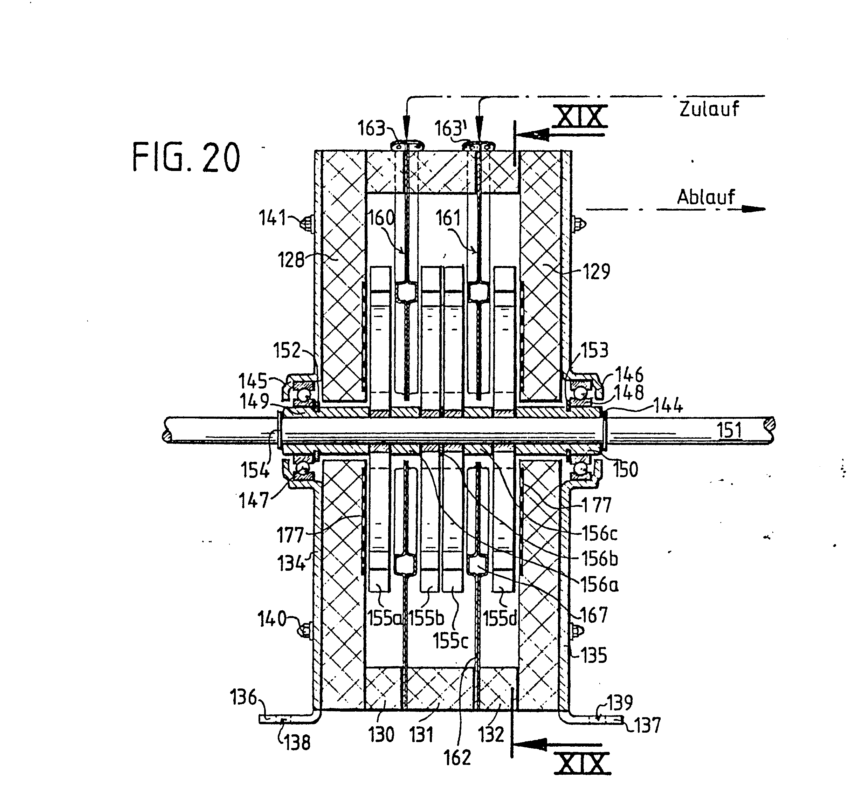

Fig. 19 zeigt eine teilgeschnittene Vorderansicht eines Motors,
bei dem mittels einer von einer Wärmepumpe über entsprechende
Wärmetauscher hervorgerufenen Temperaturdifferenz eine Massenverdünnung bzw. Massenverdichtung erzielt wird.

Fig. 2o zeigt einen Schnitt längs der Linie XX – XX von Fig. 19.

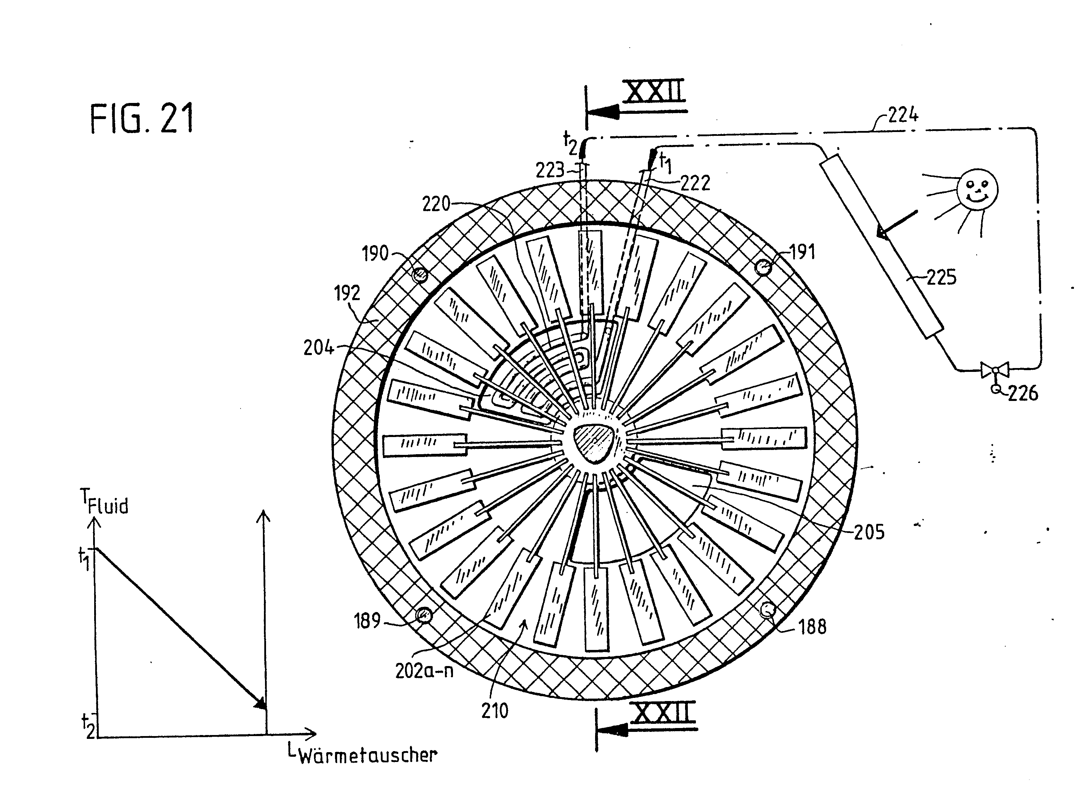

Fig. 21 zeigt eine teilgeschnittene Vorderansicht von einer
weiteren Ausführungsform eines Motors, bei dem ein Drehmoment
mittels einer Massenverdichtung bzw. einer Massenverdünnung
erzielt wird, wobei in diesem Falle die Wärmeübertragung
mittels zweier Fluidströmungen erfolgt, von denen die eine beispielshalber über eine Solarheizung erwärmt ist.

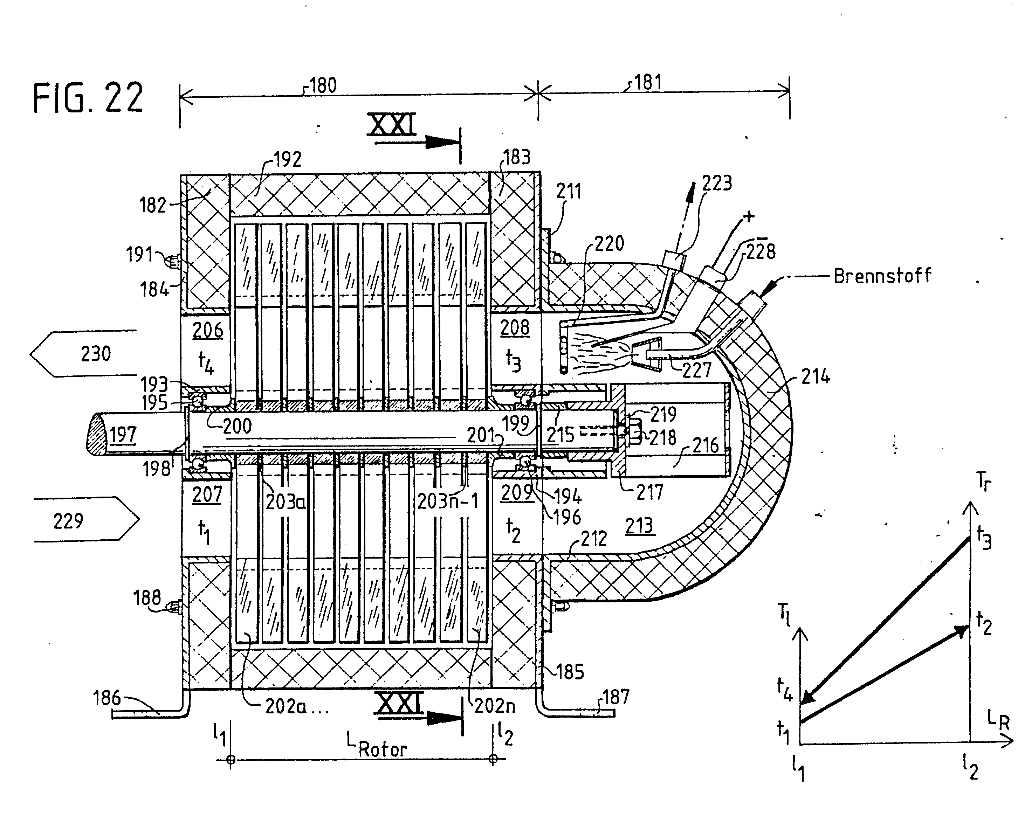

Fig. 22 zeigt einen Längsschnitt längs der Linie XXII – XXII von
Fig. 21 und erläutert gleichzeitig weitere Ausführungsformen des
Motors, bei denen das zur Kühlung verwendete Fluid umgelenkt wird
und nach einer Erwärmung bzw. Verbrennung im Gegenstrom abermals
den Rotor durchsetzt.

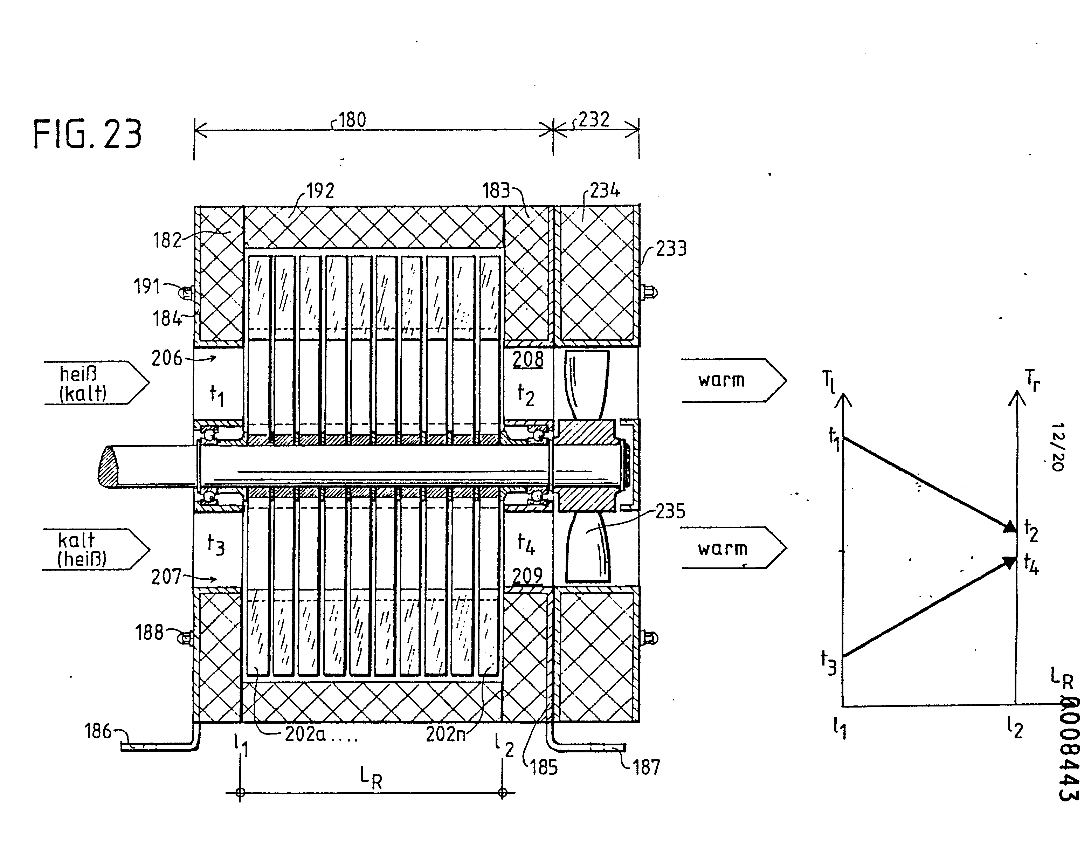

Fig. 23 zeigt im Längsschnitt eine weitere Ausführungsform eines
Motors,der sich von demjenigen in Fig. 22 im wesentlichen dadurch
unterscheidet, daß der Rotor im Gleichstrom von zwei Wärmeübertragungsfluiden durchströmt wird, welche ihre Bewegungsenergie
auf eine auf der Rotorachse gehalterte Axialturbine abgeben.

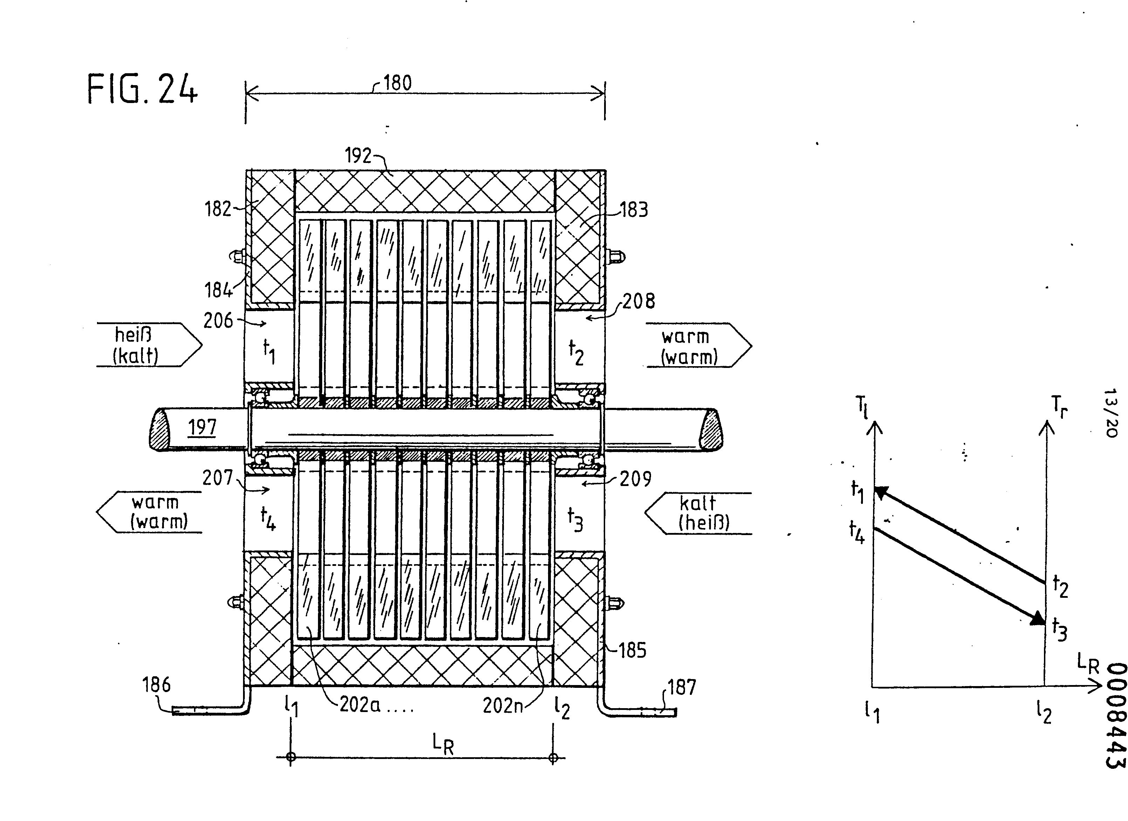

Fig. 24 zeigt im Längsschnitt eine weitere Ausführungsform des Motors von Fig. 22 bei der der Rotor von zwei Fluiden im Gegenstrom durchflossen wird.

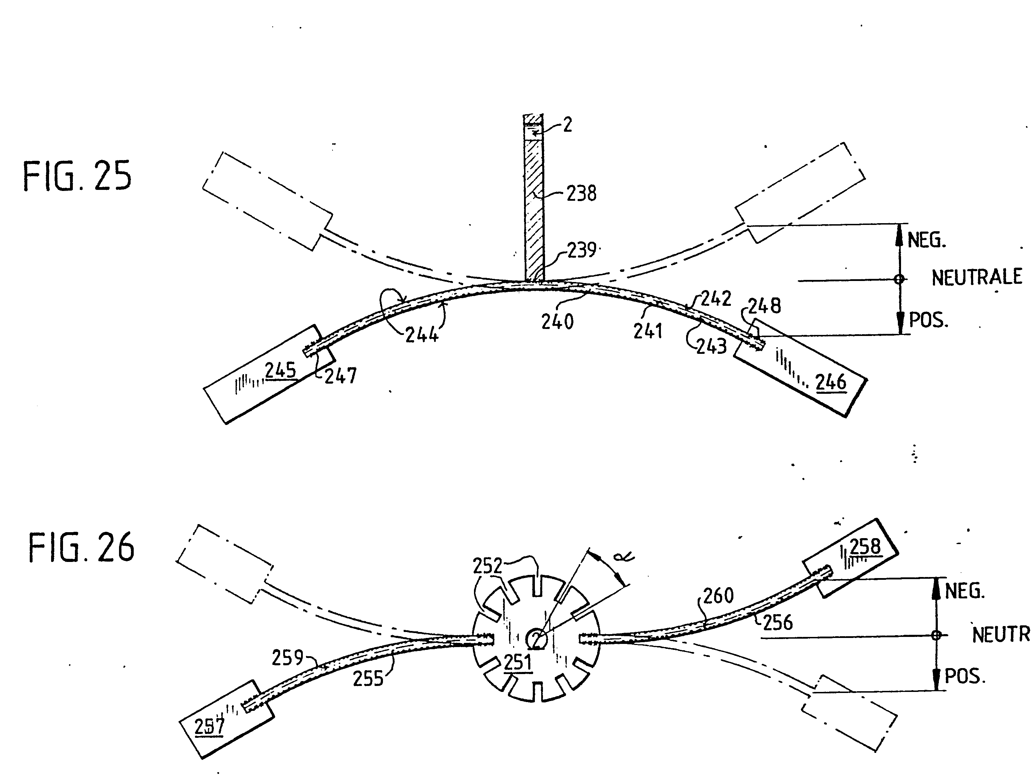

Fig. 25 zeigt in teilgeschnittenem Zustand ein Detail eines Rotors, bei dem das Drehmoment durch Massenanhebung und Massenabsenkung erzielt wird.

Fig. 26 zeigt in Vorderansicht ein Detail eines Rotors, bei dem das Drehmoment mittels einer Massenverdichtung bzw. Massenverdünnung erzielt wird.

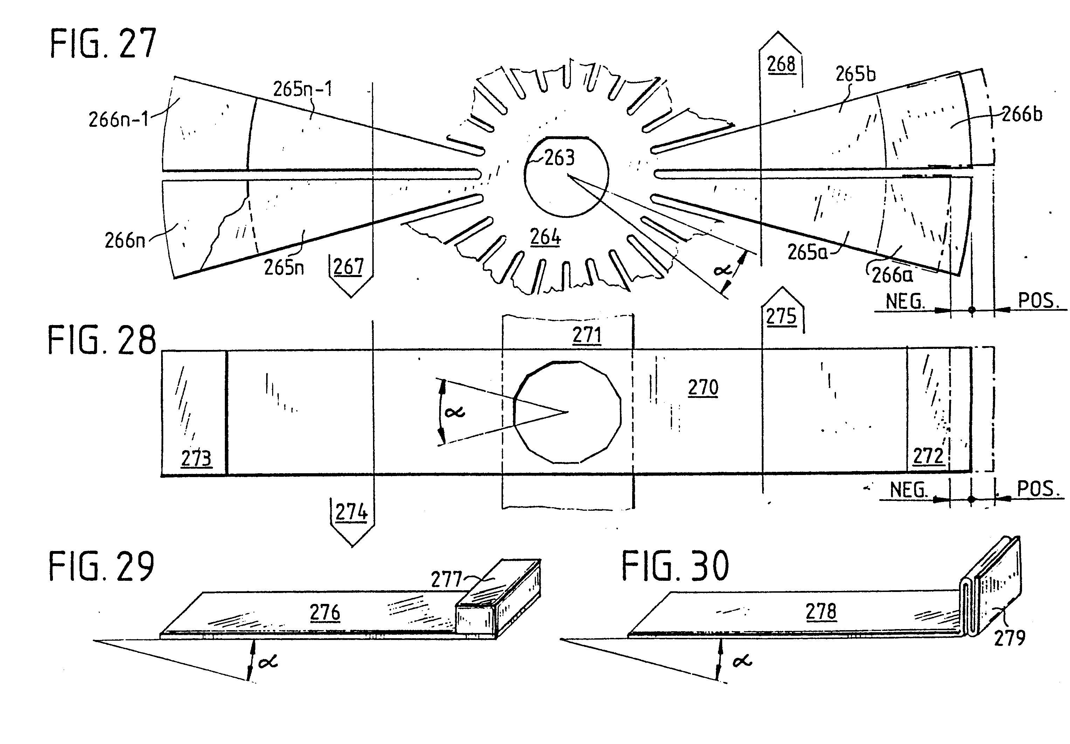

Fig. 27 zeigt eine teilgeschnittene Vorderansicht eines weiteren Rotors, der auch als Ventilator oder als rotierender Wärmetauscher ausgebildet sein kann.

Fig. 28 zeigt in Vorderansicht ein Detail einer weiteren Ausführungsform eines Rotors.

Fig. 29 zeigt in perspektivischer Darstellung eine Ausbildung von Zusatzmassen an den Enden von einen Rotor bildenden stabartigen Elementen.

Fig. 3o zeigt eine Ansicht entsprechend derjenigen von Fig. 29 mit einer weiteren Ausgestaltung der Zusatzmassen.

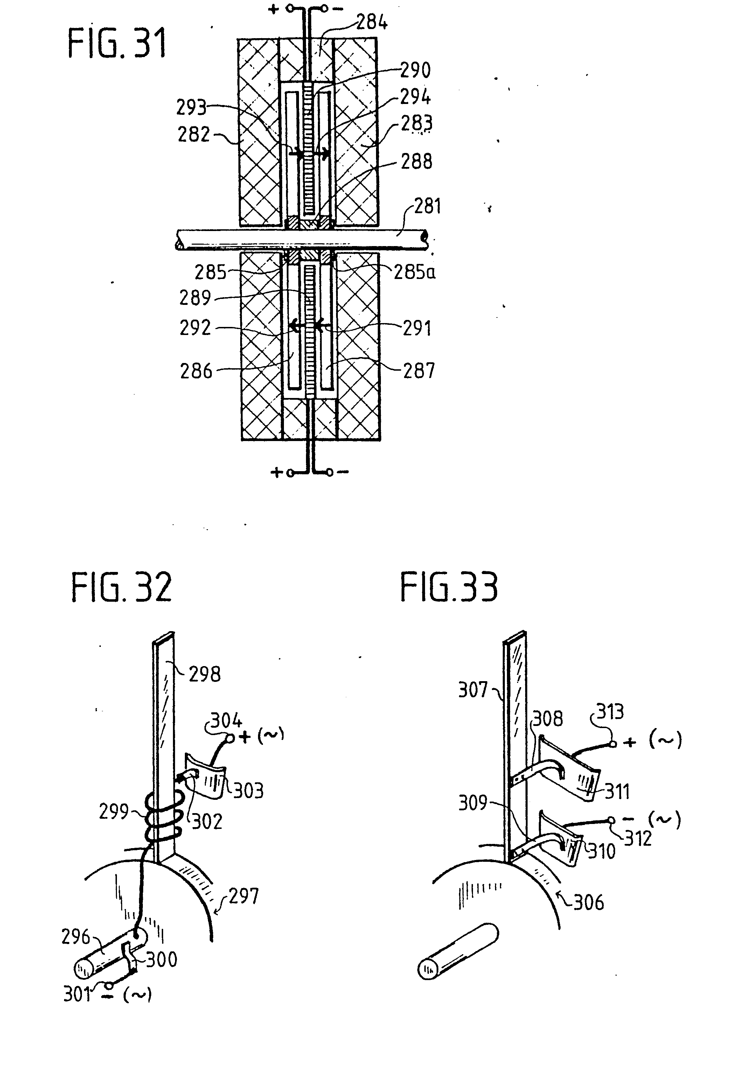

Fig. 31 zeigt einen Längsschnitt durch eine weitere Ausgestaltung eines Motors, bei dem das Drehmoment mittels einer Massenverdichtung bzw. Massenverdünnung erzeugt wird, und bei dem als Wärmequelle und Wärmesenke zumindest ein Peltierelement dient.

Fig. 32 zeigt ein Detail eines Rotors, bei dem die Wärmezufuhr durch induktive Wärme erfolgt.

Fig. 33 zeigt ein Detail eines weiteren Rotors, bei dem die Wärmezufuhr durch ohmsche Wärme erfolgt.

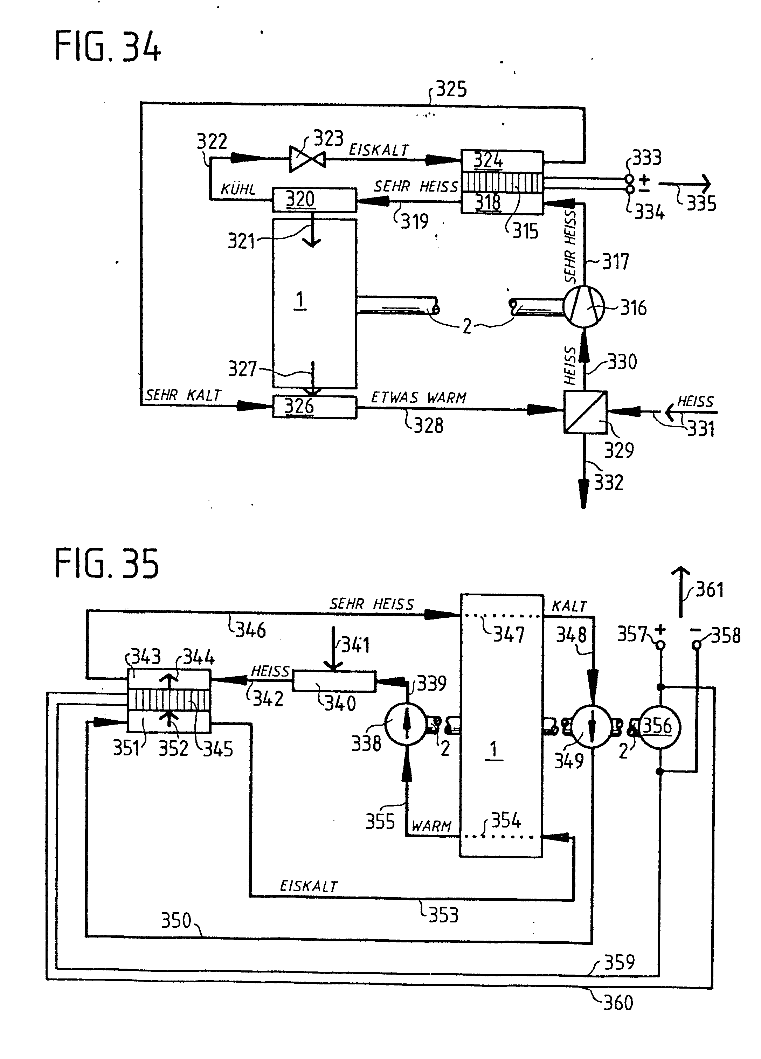

Fig. 34 zeigt eine Schaltskizze von einer Anordnung zur Erzeugung von elektrischem Strom mittels des Rotors und eines peltierelektronischen Generatorelementes.

Fig. 35 zeigt eine Schaltskizze von einer weiteren Anordnung zur Erzeugung von elektrischem Strom, bei der ein elektrischer Generator von dem Rotor angetrieben ist und ein Peltierelement als Wärmepumpe geschaltet ist, das die Wärmequelle und die Wärmesenke bildet.

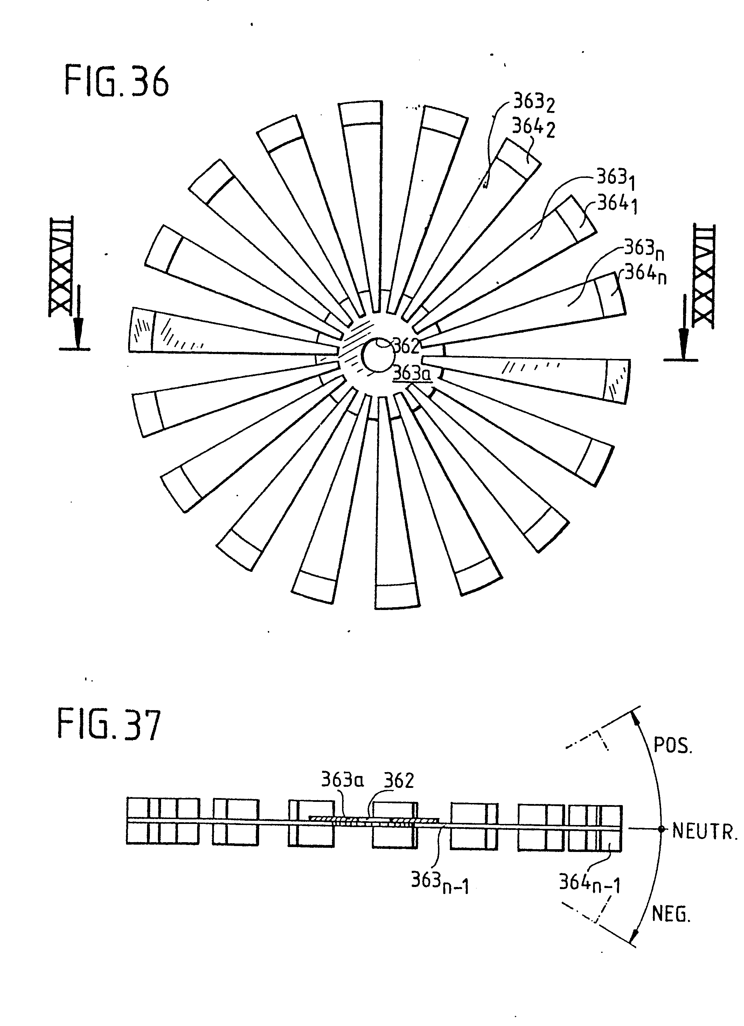

Fig. 36 zeigt eine Vorderansicht eines weiteren Rotors, der eine Variante des Rotors von Fig. 27 darstellt.

Fig. 37 zeigt eine Aufsicht auf den Rotor von Fig. 36.

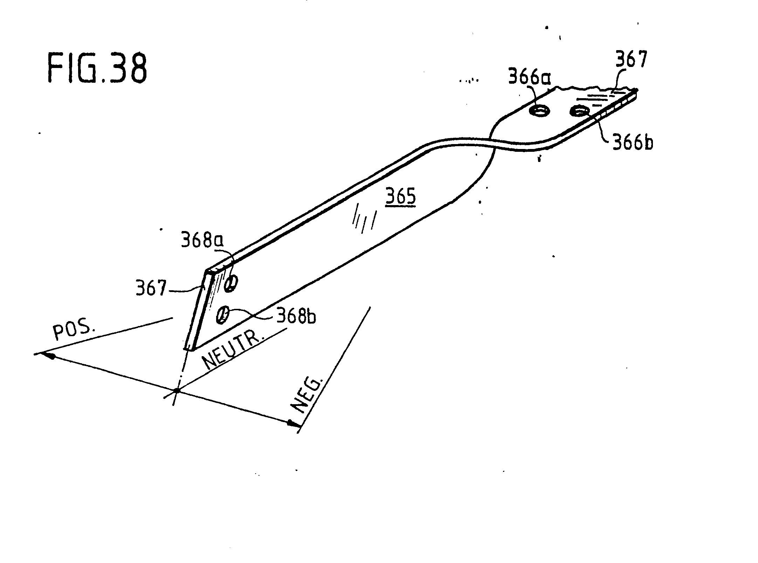

Fig. 38 zeigt ein Detail einer Variante des in den Fig. 17, 18 und 25 dargestellten Rotors, bei dem die Erzeugung eines Drehmoments mittels Massenverdünnung bzw. Massenverdichtung erfolgt.

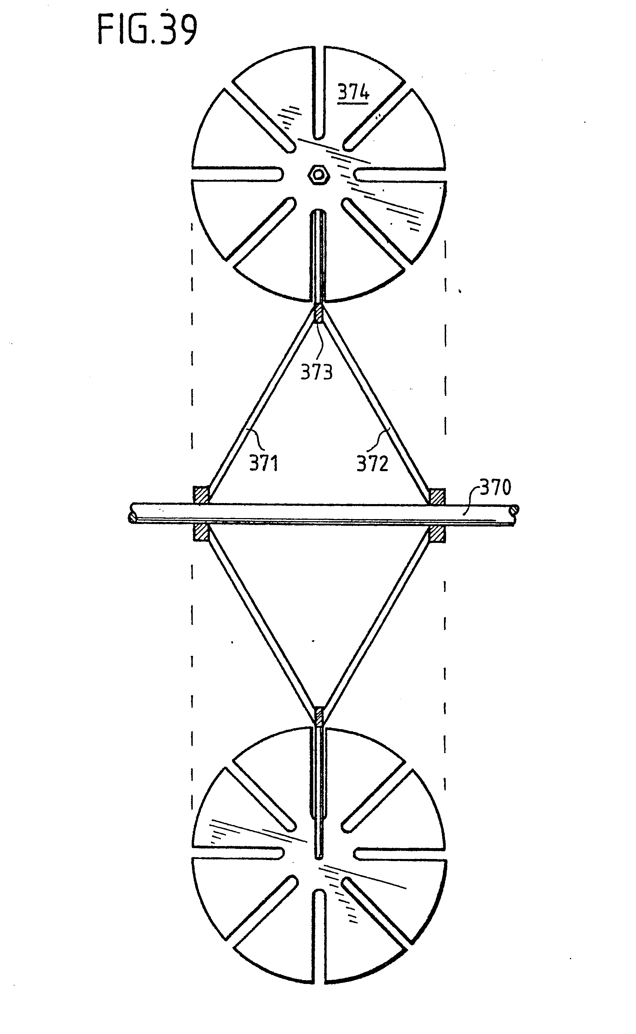

Fig. 39 zeigt in schematischer Seitenansicht eine weitere Variante eines Rotors, bei dem auf dem Umfang eines Traggerüstes Sektorensterne aus Thermo-Bimetallen angeordnet sind.

In Fig. 1 ist die Erzeugung eines Drehmoments durch Massenanhebung und Massenabsenkung schematisch dargestellt. Um eine mit
$S_R$ angedeutete durch ihre Lagerung ortsfest gehaltene Drehachse ist ein Rotor gehaltert, der, wenn alle seine Teile die
gleiche Temperatur aufweisen, um die Drehachse $S_R$ ausgewuchtet
ist und bei einer Drehung um diese den mit R bezeichneten,
durch die vertikale Schraffur angedeuteten Rotordrehkreis
beschreibt. Wenn der Rotor aus seinem thermischen Gleichgewicht gebracht wird, d.h. wenn beispielsweise zwischen dem
in Fig. 1 linken und dem in Fig. 1 rechten Teil des Rotors
eine Temperaturdifferenz erzeugt wird, kommt es aufgrund der
thermischen Ausdehnung und Schrumpfung zu einer Massenanhebung
bzw. Massenabsenkung bezogen auf die Drehachse $S_R$. Dies bedeutet,
daß sich längs eines Radiusvektors der Schwerpunkt des sich
längs des Radiusvektors erstreckenden Rotorbereiches oder Rotorteiles nach innen bzw. nach außen verschiebt. In Fig. 1
ist angenommen, daß im linken Bereich eine Massenabsenkung
im rechten Bereich eine Massenanhebung stattgefunden hat. Der
im Temperaturgleichgewicht mit dem Rotordrehkreis R zusammenfallende Massendrehkreis verschiebt sich hierdurch, wie mit
dem waagrecht schraffierten stricklierten Oval M angedeutet,
nach rechts, wobei der Massenschwerpunkt die mit $S_m$ angedeutete,
um die Exzentrität e verschobene Lage einnimmt. Es sei angenommen, daß auf den Rotor eine Gravitationskraft wirkt, deren
Richtung durch den Pfeil g angedeutet ist. Hierdurch greift
in dem Massenschwerpunkt $S_m$ eine Kraft F an, welche gleich
dem Produkt aus der Masse m des Rotors und der Gravitationskonstante g ist. Da die Drehachse $S_R$ des Rotors festgehalten ist,
entsteht somit um diese ein Drehmoment Md, das durch die folgende Formel wiedergegeben wird $M_d = F \cdot e = m \cdot g \cdot e$. Durch
diese Drehmoment wird der Rotor im Uhrzeigersinne gedreht.
Ob die Massenanhebung bzw. Massenabsenkung im "erwärmten"
oder "abgekühlten" Bereich des Rotors stattfindet, hängt von der
Konstruktion des Rotors ab.

0008443

Durch Umkehr von Wärmequelle und Wärmesenke kann die Drehrichtung jeweils umgekehrt werden.

Praktische Beispiele für die Ausbildung eines Rotors, bei dem das Drehmoment durch Massenanhebung bzw. Massenabsenkung erzielt wird, sind in den Figuren 17, 18 und 25 sowie 27 und 28 dargestellt. Wenn der Rotor entsprechend den Beispielen der Figuren 27 und 28 aus Stäben bzw. Segmenten aus einem Material mit großer Längsausdehnung besteht, erfolgt die Massenanhebung im wärmeren Bereich des Rotors, die Massenabsenkung im kälteren Bereich desselben. Wenn dagegen der Rotor entsprechend den Beispielen der Figuren 17,18 und 25 auf einer Scheibe, einer Walze, einem Ring oder einem Traggerüst, welche selbst keiner großen Wärmeausdehnung unterliegen, gehalterte Thermobimetallkörper oder -streifen enthält, erfolgt die Massenanhebung bzw. Massenabsenkung am warmen bzw. kalten Bereich des Rotors, je nachdem ob die stark dehnende oder die geringer dehnende Seite des Bimetalles nach außen oder nach innen gekehrt montiert ist.

In Fig. 2 ist ein Rotor dargestellt, bei dem das Drehmoment im wesentlichen mittels Massenverdichtung und/oder Massenverdünnung in diskreten Bereichen des Rotors bewirkt wird. Mit der Massenverdichtung und Massenverdünnung gehen bei den gezeigten Beispielen auch jeweils geringe Massenanhebungen bzw. Massenabsenkungen einher, die ebenfalls zur Bildung des Drehmoments beitragen. Aus Gründen einer Nomenklaturvereinfachung wird jedoch in diesen Unterlagen jeweils in diesen Fällen gattungsmäßig von Rotoren des Typus Massenverdichtung/Massenverdünnung gesprochen. Der Rotor ist auch in diesem Falle so ausgebildet, daß er im thermischen Gleichgewicht, d.h. dann, wenn alle seine Teile

eine gleiche Temperatur einnehmen, ausgewuchtet ist. Seine mit $S_R$'
bezeichnete Drehachse geht dann durch den Rotorschwerpunkt hindurch. Bei Erzeugung einer Temperaturdifferenz zwischen verschiedenen Bereichen des Rotors, im dargestellten Falle dem linken und dem rechten Bereich, kommt es dort zu einer Massenverdünnung bzw. einer Massenverdichtung. Dies bedeutet, daß in
einem Bereich die Massenbelegung pro Flächeneinheit geringer,
in anderem Bereich die Massenbelegung pro Flächeneinheit größer
wird. Die Kurve N unterteilt die von dem Rotordrehkreis R' begrenzte Fläche in zwei Bereiche $A_X$ und $A_Y$, von denen der eine
Bereich $A_X$ mit einer vertikalen, der andere Bereich $A_Y$ mit einer
horizontalen Schraffur angedeutet ist. Die Flächen $A_X$ und $A_Y$
haben die gleichen Massen $m_X = m_Y$, wobei jedoch die Massenbelegung
in der Fläche $A_X$ größer ist als in der Fläche $A_Y$. Der Schwerpunkt
der Fläche $A_X$ ist mit $S_X$, der Schwerpunkt der Fläche $A_Y$ mit $S_Y$
bezeichnet, die Abstände dieser Schwerpunkte von der Drehachse
$S_R$ sind mit $r_X$ und $r_Y$ angedeutet. Durch die Massenverdichtung
und die Massenverdünnung verschiebt sich der Gesamtschwerpunkt
Sm' aus der Drehachse $S_R$' hinaus um ein eine Exzentrizität e',
wie dies in Fig. 2 dargestellt ist. Wenn der Rotor in einem
Gravitationsfeld angeordnet ist, das in Richtung des Pfeiles g
wirkt, entsteht hierdurch ein Drehmoment Md' um die Drehachse $S_R$',
das den Rotor im Uhrzeigersinn dreht. Die Größe des Drehmoments
ist durch die Exzentrizität e' = $|r_X - r_Y|$ derdie exzentrisch ver-
schobene Masse des Rotors bestimmt. Das Prinzip der Massenverdichtung und der Massenverdünnung läßt sich vorzugsweise durch
von der Achse speichenartig oder stabartig abstehende Thermobimetallelemente erreichen. Ob die Massenverdichtung bzw. die Massenverdünnung an dem "warmen" oder "kalten" Bereich des Rotors
stattfindet, hängt ebenfalls davon ab, wie die Thermobimetalle
bezüglich ihrer stärker dehnenden Schicht zu der Drehachse orientiert sind. Beispiele für Rotoren, bei denen ein Drehmoment durch
Massenverdichtung und Massenverdünnung erzeugt wird, sind in den
Fig. 16 und 19 mit 24 sowie 26 und 31 mit 33 beschrieben. Die
Massenverdichtung und die Massenverdünnung gemäß Fig. 2 geht wie
bereits oben erwähnt, jeweils mit einer kleinen Massenanhebung und Massenabsenkung einher, die in Fig. 2 selbst nicht erfaßt
ist. Es ist selbstverständlich auch möglich, die beiden aus
Gründen der Übersichtlichkeit anhand der Figuren 1 und 2 getrennt dargestellten Möglichkeiten für eine Drehmomenterzeugung kombiniert und überlagert für die Herstellung von Mobiles
und Motoren zu verwenden.

In den Figuren 3 mit 8 ist mit 1 jeweils ein Rotor bezeichnet,
der um eine durch seine Drehachse 2 gehende Welle drehbar gelagert ist. Mit 3 a... 3 f sind jeweils eine Wärmequelle, mit
4 a ...4 f eine Wärmesenke bezeichnet. Die Pfeile 5 a .. 5 f
geben jeweils den Wärmefluß von der Wärmequelle zum Rotor 1,
die Pfeile 6 a.. 6 f den Wärmefluß vom Rotor 1 zu der Wärmesenke
4 a... 4 f wieder. Mit den punktierten Linienzügen ist jeweils
der Wärmefluß im Rotor angedeutet. Die strichlierten Kurvenzüge
geben den Strömungskreislauf eines Wärmetauscherfluids wieder,
wenn dieses im geschlossenen Kreislauf geführt wird. Die strichpunktierten Linienzüge geben die Führung von Wärmeaustauschfluiden
wieder, wenn diese im offenen Kreislauf geführt sind. Anhand
dieser Legende wird nun die prinzipielle Wirkungsweise der in
den Figuren 1 mit 8 schematisch dargestellten Vorrichtungen verständlich.

Bei dem Beispiel der Fig. 3 sind die Wärmequelle 3 a und die Wärmesenke 4 a in radialer Richtung einander gegenüberliegend außen am
Rotor 1 angebracht, wobei der Wärmeübergang mittels Strahlung erfolgt.

Bei dem Beispiel der Figur 4 sind eine Wärmequelle 3 b und eine
Wärmesenke 4 b einander diametral gegenüberliegend im Inneren des
Rotors 1 angebracht, wobei sie in radialer Richtung mittels Strahlung Wärme an den Rotor 1 abgeben und von diesem aufnehmen.

Bei dem Beispiel der Fig. 5 sind eine Wärmequelle 3 c und eine
Wärmesenke 4 c an den endseitigen Stirnflächen des Rotors 1
und, bezogen auf dessen Durchmesser, einander diametral gegenüber-

liegend angeordnet, wobei die Wärmeübertragung hier ebenfalls
mittels Strahlung erfolgt.

Bei dem in Fig. 6 gezeigten Beispiel sind eine Wärmequelle 3 d
und eine Wärmesenke 4 d an einer Stirnfläche des Rotors 1 bezüglich der Drehachse 2 an einander diametral gegenüberliegenden
Stellen angeordnet, wobei die Wärmeübertragung mittels Strahlung
parallel zur Drehachse 2 erfolgt.

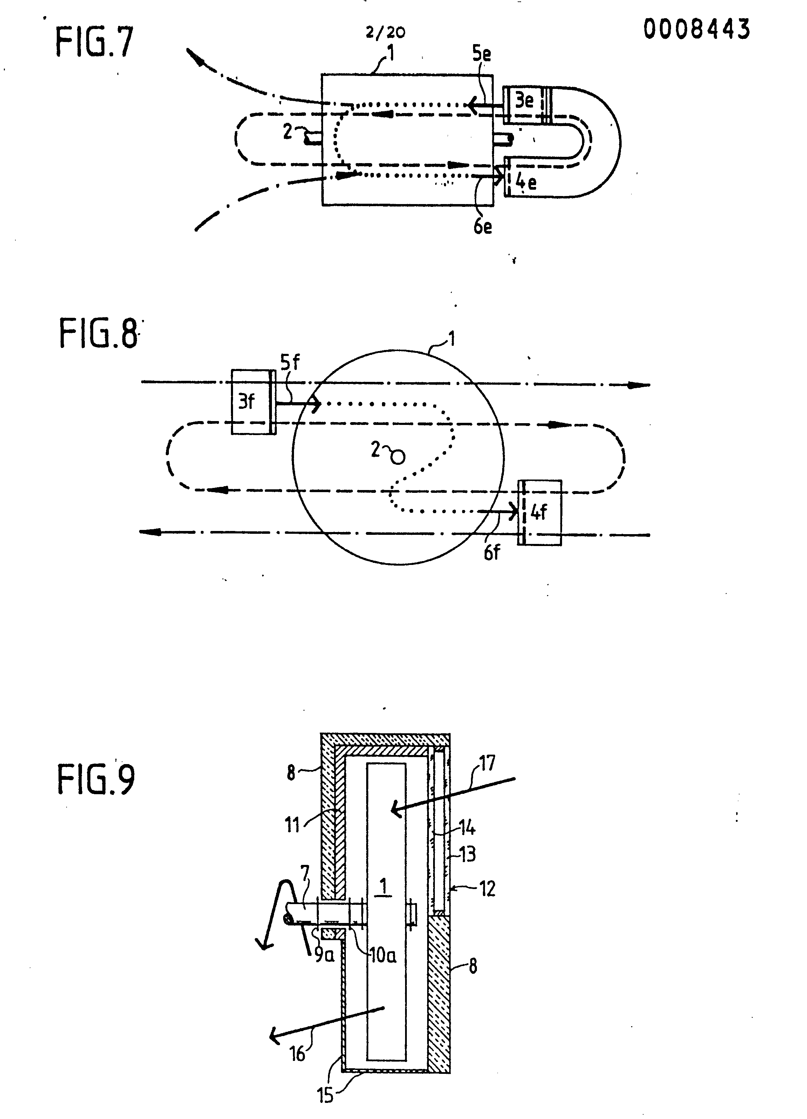

Die Anordnung der Fig. 7 entspricht im wesentlichen derjenigen
von Fig. 6, wobei jedoch hier die Wärmequelle 3 e und die Wärmesenke 4 e so miteinander verbunden sind, daß eine Wärmerückführung
stattfindet. Für die Wärmeübertragung sind drei verschiedene
Möglichkeiten eingezeichnet, zum einen der Wärmeübergang mittels
Strahlung entsprechend den Pfeilen 5 e, 6 e und der punktiert verlaufenden Linie, zum zweiten die Wärmeübertragung mittels eines
Wärmeübertragungsfluids, das entsprechend der strichlierten Linie
in einem geschlossenen Kreislauf geführt wird, und zum dritten
mittels eines Wärmeübertragungsfluids das in offenem Kreislauf
entsprechend der strichpunktierten Linien und den daran angebrachten Pfeilen geführt wird, und das links unten in den Rotor
eintritt und nach Durchlaufen der Wärmesenke und der Wärmequelle
links oben an ihm wieder austritt. Diese Führung eines Wärmeaustauscherfluids wird beispielsweise dann angewandt, wenn die
Wärmequelle über einen Verbrennungsvorgang gebildet wird, an dem
das Wärmeaustauschfluid teilnimmt, oder wenn das Wärmeaustauschfluid an Gegenstromwärmeaustauschern in der Wärmequelle und in
der Wärmesenke vorbeiströmt.

Bei dem Beispiel der Fig. 8 sind eine Wärmequelle 3 f und eine
Wärmesenke 4 f an zwei bezogen auf die Drehachse einander diametral gegenüberliegenden Stellen des Rotorumfanges derart angeordnet, daß sie mittels eines im offenen oder geschlossenen Kreislauf geführten Wärmeaustauschfluids, das auf den Rotor in radialer Richtung auftrifft, Wärme auf den Rotor und von diesem übertragen. Das Wärmeübertragungsfluid kann bei dieser Anordnung auch seine Bewegungsenergie auf den Rotor abgeben, so daß zusätzlich zu dem durch die thermische Ausdehnung bedingten Drehmoment eine durch die Bewegungsenergie des Wärmeübertragungsfluids induzierte Komponente hinzukommt.

In den Figuren 9 mit 11 sind verschiedene Motore dargestellt, bei denen durch Temperaturdifferenzen an dem Rotor 1 ein Drehmoment an eine Welle 7 abgegeben wird. Bei dem Motor von Fig. 9 ist die Welle 7 in einem Gehäuse 8 drehbar gelagert und gegen eine Verschiebung in axialer Richtung durch Ringe 9 a und 10 a gesichert. Das Gehäuse 8 umschließt den Rotor 1 an seiner Oberseite vollständig und an seiner Vorderseite unten. Das Gehäuse 8 besteht aus einem thermisch gut isolierenden Material oder trägt zumindest oben in seinem Inneren eine Wärmereflektionsschicht oder Wärmespeicherschicht 11. Auf seiner Vorderseite enthält das Gehäuse 8 ein Fenster 12, in dem eine Glasscheibe 13 und dahinter zumindest eine Wärme-Isolierglasscheibe 14 angeordnet sind. Der von dem Gehäuse 8 am unteren und rückwärtigen Ende offen gelassene Bereich ist mit einer Wärmetauschermembrane 15 verschlossen, durch welche, wie durch den Pfeil 16 angedeutet, der Rotor von seinen im unterem Bereich des Gehäuses 8 befindlichen Teilen Wärme abstrahlen kann und sich dabei abkühlt. Der Pfeil 17 deutet eine Zufuhr von Wärme durch die Scheiben 13 und 14 an, durch die der Rotor im oberen Bereich des eine Wärmestaukammer bildenden Gehäuses 8 erwärmt wird. Die durch den Pfeil 17 angedeutete Wärmezufuhr kann beispielsweise durch direkte Sonneneinstrahlung bewirkt werden, die gegebenenfalls durch eine Linse oder eine andere Sammeleinrichtung konzentriert wird. Auch anstelle der Scheiben 13, 14 kann eine derartige Sammeleinrichtung eingesetzt werden. Die Wärmetauschermembrane 15 ist nicht erforderlich, wenn der Rotor 1 offen mit der Umgebung Wärme tauschen kann und dies erwünscht ist. Durch die Wärmezufuhr gemäß dem Pfeil 17 wird der Rotor 1 im oberen Bereich aufgeheizt, so daß er eine Massenverschiebung erfährt und sich, wie durch Pfeil 18 angedeutet, zu drehen beginnt. Bei dieser Drehung gerät der zunächst erwärmte Bereich nach unten, wo er durch Energieabgabe entsprechend dem Pfeil 16 abkühlt, so daß es zu einer Massenrückverschiebung kommt. Dieser Vorgang wiederholt sich fortlaufend für die aufeinanderfolgenden Segmente des Rotors, so daß an der Welle 7 ein Drehmoment abgegeben wird.

Fig. 1o zeigt einen Motor, bei dem ein Energie-Recycling vorgenommen wird. Der Rotor 1 ist über seine Welle 7 in einem wärmeisolierten Gehäuse 19 aufgenommen. Das Gehäuse 19 wird von einem unten an dem Rotor 1 stirnseitig mündenden Kanal 2o durchsetzt. Über den Kanal 2o wird, wie durch den Pfeil 21 angedeutet, dem Rotor 1 ein Kühlfluid, beispielsweise Kühlluft, zugeführt, das nach Durchsetzen des gemäß der Zeichnung unteren Bereiches des Rotors, wie durch den Pfeil 22 angedeutet, in einen an der gegenüberliegenden Stirnseite des Rotors mündenden Kanal 23 austritt. Der Kanal 23 ist innerhalb des Gehäuses 19 derart umgelenkt, daß er aus der Sicht der Zeichnung an dem oberen Teil des Rotors an dessen rechten Stirnfläche mündet. In dem Kanal 23 ist ein von dem Rotor 1 über die Welle 7 angetriebener Ventilator 24 vorgesehen, der über den Kanal 2o im unteren Teil des Rotors und den Kanal 23 das Kühlfluid ansaugt, wie durch den Pfeil 25 angedeutet ist, und es dem oberen Teil des Rotors zuführt. Das Kühlfluid wird dabei erwärmt. In dem stromab zu dem Ventilator 24 liegenden Bereich des Kanales 23 mündet eine nicht näher dargestellte Brennerdüse, mittels derer dem Kühlfluid ein Brennstoff, wie durch den Pfeil 26 angedeutet, zugeführt wird, der unter Wärmeabgabe mit diesem reagiert und es erhitzt, bevor es in den Rotor 1 gelangt, den es nach einer gewissen Abkühlung durch einen stirnseitig in Fig. 1o links an dem Rotor mündenden Kanal 27 als Abgas, wie durch den Pfeil 28 angedeutet, verläßt. Ein praktisches Ausführungsbeispiel dieses Motors ist in Fig. 22 dargestellt. Durch das Abkühlen und Erhitzen der verschiedenen Bereiche des Rotors 1 wird dieser, wie durch den Drehpfeil angedeutet, in Umdrehung gesetzt. Bei geeigneter Gestaltung des Rotors kann auch die Bewegungsenergie des heißen Fluids an den Rotor abgegeben werden und zu dessen Drehmoment beitragen.

Anstelle des Brenners kann auch eine andere Wärmequelle angeschlossen sein. Das über die Kanäle 2o, 23 und 27  sowie den
Rotor 1 und dem Ventilator 27 geförderte Wärmeübertragungsfluid
wird dann indirekt erhitzt. Durch Verbinden der Kanäle 2o und
27 läßt sich ein geschlossener Kreislauf für das Wärmeübertragungsfluid erzielen. Durch einen Wärmetauscher wird dabei das
aus dem Kanal 27 austretende erhitzte Wärmeübertragungsfluid
abgekühlt.

In Fig. 11 ist der Aufbau eines turbinenartigen Antriebsmotors
schematisch dargestellt. Aus Übersichtlichkeitsgründen sind
das Leitungs- und Steuersystem für die Wärmeübertragungsfluide
weggelassen, da auf diese anhand der folgenden Gruppenschaltbilder der Figuren 12 bis 14 und 34, 35 näher eingegangen ist.

Der in Fig. 11 dargestellte Motor besteht aus einem in einem
Bereich erwärmten und in einem anderen Bereich gekühlten Rotor
1, der zur Vermeidung von Wärmeverlusten vollständig mit einem
Isoliermantel 29 umgeben ist. Die Welle 7 führt aus dem Isoliermantel an dessen Vorderseite und an dessen Rückseite heraus
und ist in diesem gelagert. Die Welle 7 treibt eine Wärmepumpe
3o an, die gemeinsam mit dem von dem Isoliermantel umgebenen
Rotor in einem strömungsgünstig geformten Motorgehäuse 31 angebracht ist, das unter seiner Außenhaut 32 einen durch die
Strichlierung 33 angedeuteten Wärmetauscher enthält, über welchen die Wärmepumpe 3o der Umgebung, d.h. beispielsweise der
Luft oder dem Wasser Wärme entzieht. Am vorderen Ende des Motorgehäuses 31  tritt die Welle 7 aus. An diesem freien Ende der
Welle 7 ist eine Turbine 34 befestigt, welche das
Medium der Umgebung an dem Motorgehäuse 31 und damit an dem
Wärmetauscher 33 vorbeiführt. Die Turbine 34 ist an ihrem das
Motorgehäuse fast berührenden Rand mit scharfen Kanten 35 ausgebildet, welche bei Beginn einer Eisung am vorderen Teil der
Außenhaut 32  die sich bildende Eisschicht abkratzen oder abstreifen. An dem rückwärtigen Teil der Welle 7 ist schließlich
ein Elektromotor-Generator 36 angebracht. Er wird von der Welle 7 angetrieben und kann je nach Betriebsart als Startmotor oder als
Generator zur Stromgewinnung verwendet werden. Im Kreislauf der
Wärmepumpe ist ferner eine nicht gezeigte Energieeinspeisung,
beispielsweise mittels einer Heizung, einem Brenner oder ähnlichem
vorgesehen. Der Motor von Fig. 11 ist über Schwenkzapfen 37 und
einen Lagerblock 38 schwenkbar gehaltert.    Bei dem
Betrieb des Motors erzeugt die Wärmepumpe, gegebenenfalls unterstützt durch die externe Wärmezufuhr, die für den Betrieb des
Rotors 1 notwendige Temperaturdifferenz, indem sie die Umgebung
über den Wärmetauscher 33 abkühlt. Da die Wärmepumpe 3o vom
Rotor 1 selbst angetrieben wird, ist zum Starten der Anordnung
die Inbetriebnahme des Motors 36 erforderlich.

Der Betrieb der Motoren nach dem Prinzip der vorliegenden Erfindung erfolgt dann mit besonders hohem Wirkungsgrad, wenn eine
Wärmerückgewinnung stattfindet, und die dem Rotor auf der kalten
Seite entzogene Energie der warmen Seite durch "Recycling" wieder
zugeführt wird. Hierzu eignen sich besonders Wärmepumpen. In den
Figuren 11 bis 15, 34 und 35 sind verschiedene Varianten eines
derartigen Betriebs anhand von Gruppenschaltbildern erläutert.
Diese Schaltungen können für den Betrieb der in den Figuren 1o
und 11 beschriebenen Motoren und deren Varianten verwendet werden.

Bei der Schaltung von Fig. 12 stehen dem Rotor 1 an zwei diametral
aneinander gegenüberliegenden Stellen Wärmetauscher 4o und 41 gegenüber. Von dem Wärmetauscher 4o führt eine Leitung 43 zu einem
Wärmepumpenverdichter 44 und von diesem eine Leitung 45 zu dem
zweiten Wärmetauscher 41. Vom Wärmetauscher 41 führt eine Leitung
46 zu einem Wärmepumpen-Expansionsventil 47, von dem eine Leitung
48 zu dem ersten Wärmetauscher 4o zurückführt. Die Wärmetauscher
4o und 41 sind somit in einem Wärmepumpenkreislauf eingesetzt,
der aus den Leitungen 43, dem Wärmepumpenverdichter 44, den
Leitungen 45, 46 ,dem Expansionsventil 47 und der Leitung 48 besteht und in der genannten Reihenfolge, d.h. in Richtung der in
Fig. 12 eingezeichneten Pfeile durchflossen wird. Da der Wärmetauscher 4o zwischen dem Expansionsventil 47 und dem Wärmepumpenverdichter 44 angeordnet ist, tritt in den Wärmetauscher 4o
ein sehr stark abgekühltes Wärmeübertragungsfluid ein, so daß
der Wärmetauscher 4o als Wärmesenke dient und dem Rotor 1, wie
durch den Pfeil 49 angedeutet, Energie entzieht. Das durch den
Wärmetauscher 4o strömende Wärmeübertragungsfluid erwärmt sich
hierbei zunehmend, so daß es bei seinem Austritt aus dem Wärmescher 4o bereits erwärmt ist. Durch den Wärmepumpenverdichter
44 wird das Wärmeübertragungsfluid weiter erhitzt, so daß es
in den Wärmetauscher 41 heiß eintritt, der somit als Wärmequelle
dient und dem ihm gegenüberliegenden Teil des Rotors 1, wie
mit dem Pfeil 5o angedeutet, Energie zuführt. Das den Wärmetauscher 41 durchströmende Wärmeübertragungsfluid wird hierbei
abgekühlt, so daß es in die Leitung 46 bereits relativ kalt
austritt, bevor es in das Expansionsventil 47 eintritt und
nach Durchströmen desselben weiter abgekühlt wird. Der Wärmepumpenverdichter 44 wird von der Welle 2 des Rotors 1 direkt
angetrieben, wozu wie durch den Pfeil 51 angedeutet, Energie
verbraucht wird. In die Leitung 43 mündet eine Leitung 52,
in die ein motorgesteuertes Strömungsminderungsventil 53 eingesetzt ist. Die Leitung 52 geht von einem Wärmetauscher 54
aus, der über eine Leitung 56, welche aus der Leitung 48 abzweigt, mit einem Teil des vom Expansionsventil 47 abgekühlten
Wärmeübertragungsfluids beschickt wird. Der Wärmetauscher 54
steht mit der Umgebung in Wärmeaustausch und entzieht dieser,
wie durch den Pfeil 55 angedeutet, Wärme. Dem Wärmetauscher
54 kann des weiteren über einen in seinem Inneren angebrachten
Wärmetauscher, im dargestellten Fall eine von an eine Spannungsquelle angeschlossenen Heizschlange 57, wie durch den Pfeil 58
angedeutet, zusätzliche Energie zugeführt werden. Der für den
Betrieb des Rotors 1 notwendige Wärmebedarf wird somit über
den Wärmetauscher 54 durch die aus der Umwelt aufgenommene, mit
dem Pfeil 55 angedeutete, und/oder die über die Heizschlange
57 zugeführte  und durch den Pfeil 58 angedeutete Wärmezufuhr
gedeckt.

In Fig. 13 bedeutet das durch strichpunktierte Linien angedeutete Kästchen a die gesamte in Fig. 12 gezeigte Schaltung. Die in

Fig. 13 dargestellte Schaltung unterscheidet sich daher von der
in Fig. 12 lediglich dadurch, daß auf der mit der Drehachse 2
des Rotors 1 zusammenfallenden Welle ein Generator-Motor 59 angebracht ist, der je nach Schaltung, wie durch den Pfeil 6o
angedeutet, Energie in Form von Strom liefert oder, wie durch
den Pfeil 61 angedeutet, Energie aufnimmt, d.h. als Startmotor
dient.

In Fig. 14 bezeichnet das mit strichpunktierten Linien umgrenzte
Kästchen b die gesamte Schaltung der Fig. 13. Die Anordnung unterscheidet sich von dieser lediglich dadurch, daß auf der mit der
Drehachse 2 des Rotors 1 zusammenfallenden Welle eine Turbine 62
gehaltert ist, welche die selben Funktionen ausübt, wie die
Turbine 34 des in Fig. 11 gezeigten Motors. Dies bedeutet zum
einen, daß die Turbine 62 eine Vereisung des Wärmetauschers 54
verhindert, zum anderen, daß sie dem Wärmetauscher 54 das Medium
der Umgebung zuführt, welches durch den Wärmetauscher 54 abgekühlt
wird, wobei sie des weiteren, wie durch den Pfeil 63 angedeutet,
eine Antriebsleistung vollbringt. Die in Fig. 14 gezeigte Schaltung beinhaltet daher ein Beispiel für den Betrieb des in Fig. 11
gezeigten Motors.

In Fig. 15 ist eine Variante der Schaltung von Fig. 13 dargestellt.
Der Rotor 1 wird hier direkt von einem im Gegensatz zu den Beispielen Fig. 11 bis Fig. 14 nicht unter Druck stehenden Wärmeaustauschfluid durchströmt, das von einer von dem Rotor angetriebenen
Umwälzpumpe bzw. einem Ventilator 64 in einem geschlossenem Kreislauf umgepumpt wird. Der Ventilator oder die Umwälzpumpe 64 sind
von dem Rotor 1 angetrieben. Der Kreislauf für das Wärmeübertragungsfluid besteht aus einer Leitung 65,die von der Umwälzpumpe bzw.
dem Ventilator 64 zu einem ersten Gegenstromwärmetauscher 66 führt.
Von dem Gegenstromwärmetauscher 66 führt eine Leitung 67 zu der
Stirnseite des Rotors 1, durch den das Wärmeübertragungsfluid, wie
durch die Punktierung 68 angedeutet, im oberen Bereich frei hindurchströmt, wozu es notwendig ist, daß es nicht unter Überdruck steht. Nach seinem Austritt aus dem Rotor 1,
strömt das Wärmeübertragungsfluid über eine Leitung 69, in
der ein motorgesteuertes Strömungsminderungsventil 7o angebracht ist, zu einem Wärmetauscher 71 und von diesem über
eine Leitung 72, zu einem zweiten Gegenstromwärmetauscher 73,
den es über eine Leitung 74 verläßt, welche an dem unteren
Teil des Rotors 1 links stirnseitig mündet. Das Wärmeübertragungsfluid durchströmt den unteren Bereich des Rotors, wie
durch die Punktierung 75 angedeutet, und tritt aus diesem in
eine Leitung 76 aus, welche zur Umwälzpumpe 64 zurückführt.
Von der Leitung 69 zweigt eine mit einem Regelventil 77 versehenen Leitung 78 ab, die zu einem mit K bezeichneten Reservoir
für das kalte Wärmeübertragungsfluid führt. In die Leitung 72
mündet eine mit einem Regelventil 79 versehene Leitung 8o, die
von einem Behältnis W mit warmen Wärmeübertragungsfluid heranführt.
In dem Wärmetauscher 71 ist eine Heizeinrichtung angebracht,
die im dargestellten Falle eine von einer Spannungsauelle gespeiste Heizschlange 81 bildet.

Die Gegenstromwärmetauscher 66 und 73, die primärseitig in den
vorstehend beschriebenen Kreislauf für das Wärmeübertragungsfluid
eingeschaltet sind, liegen sekundärseitig in einem Wärmepumpenkreislauf. Der Wärmepumpenkreislauf besteht aus einer von dem
Gegenstromwärmetauscher 66 herausführenden Leitung 83, welche zu
einem Expansionsventil 84 führt. Das Expansionsventil 84 ist über
eine Leitung 85 an die Sekundärseite des zweiten Gegenstromwärmetauschers 73 angeschlossen, von dem seinerseits eine
Leitung 86 zu einem Wärmepumpenverdichter 87 führt, der über
eine Leiung 88 wiederum sekundärseitig an den ersten Gegenstromwärmetauscher 66 angeschlossen ist. Zur Vereinfachung des Verständnisses sind an den einzelnen Rohrleitungsabschnitten die in
diesen herrschenden Temperaturen angegeben. Auf der Welle des
Rotors 1 ist schließlich ein Generatorstartmotor 89, wie im Falle
des Beispiels von Fig. 13, angebracht.

Beim Anfahren des der Schaltung von Fig. 15 zugrundeliegenden Motors werden zunächst über den Startmotor 89 der Ventilator 64, der Rotor 1 und der Wärmepumpenverdichter 87 angetrieben. Von der Umwälzpumpe 64 wird das Wärmeübertragungsfluid in dem von den Leitungen 65, 67, 69, 72, 74 und 76 gebildeten Kreislauf umgepumpt, wobei es an den mit 68 und 75 gekennzeichneten Stellen durch den Rotor hindurchfließt. Das Wärmeübertragungsfluid wird zunächst in dem Wärmetauscher 71 durch die Heizschlange 81 erwärmt, oder es wird über die Leitung 8o und das Regelventil 79 ein bereits warmes Fluid in den Kreislauf eingespeist. Das in der Leitung 72 strömende warme Wärmeübertragungsfluid wird in dem Wärmetauscher 73 abgekühlt, da dieser sekundärseitig von dem im Expansionsventil 84 stark abgekühlten und als "eiskalt" bezeichneten, über die Leitung 85 zugeführten Fluid des Wärmepumpenkreislaufes beaufschlagt ist. Das Wärmeübertragungsfluid wird hierdurch ebenfalls abgekühlt, so daß es in der Leitung 74 "eiskalt" strömt und als solches in den Rotor 1 eintritt.

Das Wärmeübertragungsfluid entzieht dem Rotor 1 bei seinem mit der Strichpunktierung 75 angedeuteten Durchlauf Wärme und tritt aus dem Rotor 1 in die Leitung 76 erwärmt ein. In diesem erwärmten Zustand strömt es über die Umwälzpumpe 64 und die Leitung 65 zu dem ersten Gegenstromwärmetauscher 66 und wird dort weiter aufgeheizt, da der Gegenstromwärmetauscher 66 sekundärseitig über die Leitung 88 mit dem Ausgang des Wärmepumpenverdichters 87 verbunden ist, welcher die über den zweiten Gegenstromwärmetauscher 73 dem von dem Wärmetauscher 71 kommenden Wärmeübertragungsfluid entzogene Wärme durch mechanisch geleistete Kompressionsarbeit vermehrt. Das Fluid im Wärmepumpenkreislauf wird hierbei im Gegenstromwärmetauscher 66 abgekühlt, so daß es über die Leitung 83 lediglich warm zu dem Expansionsventil 84 strömt. Das über den Gegenstromwärmetauscher 66 erhitzte Wärmeübertragungsfluid tritt oben in den Rotor 1 ein, erwärmt diesen partiell und kühlt sich bei seinem durch die Strichpunktierung 68 angedeuteten Durchlauf durch den Rotor weitgehend ab, so daß es kalt über die Leitung 69 zu dem Wärmetauscher 71 kommt. Da das Wärmeübertragungsfluid den Wärmetauscher 71 unter
die Umgebungstemperatur abkühlt, nimmt es dort, wie durch den
Pfeil 9o angedeutet, von der Umgebung Wärme auf, so daß die
Wärmezuführung gemäß dem Pfeil 9o a über die Heizschlange 81
weitgehend und gegebenenfalls völlig entfallen kann. Sobald
im Rotor 1 eine Temperaturdifferenz erzeugt ist, beginnt sich
dieser zu drehen, so daß nunmehr der Startmotor 89 abgeschaltet oder als Generator umgeschaltet werden kann. In diesem
Betriebszustand kann, wie durch den Pfeil 81 a angedeutet,
dem System elektrische Energie entnommen werden. Es ist jedoch
selbstverständlich auch möglich anstelle des Generators eine
Arbeitsmaschine oder eine Turbine anzutreiben.

Das in Fig. 16 in Vorderansicht gezeigte "Sonnenrad" besteht
aus einem Fuß 83 a, an dem über einen Ständer 84 a ein Tragring
85 a befestigt ist, der mittels einer Traverse 86 a ein Lager
87 a trägt, in dem ein Rotor 88 a mit seiner Nabe gehaltert ist.
Der Rotor 88 a, der sich im dargestellten Beispiel im thermischen Gleichgewicht befindet, besteht aus einer Reihe von der
Nabe radial abstehender Speichen 89 a, die in äquidistanten
Winkelabständen voneinander angeordnet sind. Im dargestellten
Beispiel enthält der Rotor 12 Speichen. Die Speichen bestehen
aus Thermobimetallstreifen, bei denen die Trennfläche zwischen
den Metallschichten mit unterschiedlichem Ausdehnungsvermögen
parallel zur Drehachse des Rotors verlaufen. Die Speichen 89 a
sind auf einer Seite geschwärzt oder dunkelfarbig eingefärbt,
wie es beispielsweise durch den Pfeil D angedeutet ist, und auf
der anderen mit den Bezugszeichen H angedeuteten Seite reflektiert
gestaltet oder hellfarbig eingefärbt. Wenn das Sonnenrad in
die Sonne gestellt wird erwärmen sich die der Sonne zugekehrten
dunklen Flächen der Speichen stärker als die der Sonne zugekehrten hellen Seiten, so daß sich die Speichen unterschiedlich verbiegen und damit in einem Teil des Kreissektors eine Massenverdichtung, in einem anderen eine Massenverdünnung erzeugen.
Hierdurch entsteht ein Drehmoment, durch das sich das Sonnenrad dreht.

Wenn die in Fig. 16 gezeigte Anordnung mit einem Teil des Rotors in einem Käfig angebracht wird, beispielsweise entsprechend der Darstellung von Fig. 9, sind die Speichen auf beiden Seiten eingeschwärzt oder dunkelfarbig eingefärbt.

Der in den Figuren 17 und 18 gezeigte Motor enthält ein Gehäuse, das aus einem zwischen zwei plattenartigen Seitenelementen 91 und 92 gehalterten rohrartigen Wandungsteil 93 besteht, durch welche miteinander fluchte Durchgangsbohrungen 94 bis 97 hindurchreichen, in welche Verbindungsbolzen 98 bis 1o1 eingeführt sind, mittels derer die Seitenelemente 91, 92 und das rohrartige Wandungsteil 93 zusammengepreßt werden. Die plattenartigen Seitenelemente 91, 92 sind an ihrer Unterseite rechteckförmig ausgebildet und mit Bohrungen 1o2 und 1o3 zur Befestigung eines Standfußes versehen. In der Mitte der plattenartigen Seitenelemente 91 und 92 sind, wie aus Fig. 18 hervorgeht, Durchgangsbohrungen angebracht, in welche Lagerschalen 1o4 und 1o5 aufgenommen sind. In den Lagerschalen 1o4, 1o5 ist die Welle 1o6 des Rotors gelagert, wobei sie mittels je eines Fixierringes mit Gleitscheibe 1o7 und 1o8 an einer Längsverschiebung gehindert ist. Auf der Welle 1o6 ist mittels Fixierungsringen 1o9 und 11o eine Nabe 111 der mit dieser einstückig verbundenen und radial von dieser abstehenden Rotorscheibe 112 über Nut und Feder drehfest verbunden. Die Rotorscheibe 112 hat eine Außenkontur in Form eines gleichseitigen Polygons, im dargestellten Falle eines gleichseitigen Achtecks. An ihren geradlinigen Außenkanten 113 a bis 113 h sind mittels Schrauben 114 Thermobimetallstreifen 115 a bis 115 h derart in ihrer Mitte befestigt, daß sie sich im wesentlichen senkrecht zur Rotorscheibe 112 erstrecken, wenn sie alle auf einer konstanten, der sogenannten neutralen Temperatur, beispielsweise der Raumtemperatur gehalten sind. Die Thermobimetallstreifen 115 a bis 115 h entsprechen in ihrer Länge nahezu der Länge des rohrartigen Wandungsteiles 93. An den freien Enden der Thermobimetallstreifen 115 a bis 115 h sind Zusatzmassen
116 a bis 116 h und 117 a bis 117 h angebracht, welche dazu
dienen, das durch die thermische Verbiegung der Thermobimetallstreifen induzierte Drehmoment um die Welle 1o6 zu vergrößern.
Die Zusatzmassen 116 a bis 116 h und 117 a bis 117 h sind im
dargestellten Falle an den Enden der Thermobimetallstreifen 115
a bis 115 h festgeschweißt. Die Thermobimetallstreifen sind
ferner an ihrer Oberfläche zur besseren Wärmeaufnahme und -abgabe
eingeschwärzt.

Das Innere des Gehäuses, in welchem der Rotor umläuft, ist mittels einer Trennwandung 118 in zwei Kammern 119 und 12o unterteilt. Die Trennwandung 118 ist derart ausgebildet, daß die
Rotorscheibe 112 und die Thermobimetallstreifen 115 a bis 115 h
mit den an ihnen befestigten Zusatzmassen 116 a bis 116 h, 117 a
bis 117 h von der Kammer 119 in die Kammer 12o und umgekehrt
durchtreten können. Die Kammer 119 durchsetzt ein Wärmetauscher
121, die Kammer 12o ein Wärmetauscher 122. Die Wärmetauscher
121, 122 sind, wie aus Fig. 18 hervorgeht, schlauchartig ausgebildet und reichen zumindest an der Befestigungsstelle der Thermo-
bimetalle an der Rotorscheibe 112 möglichst nahe an diese heran.
Der Wärmetauscher 121 ist über Öffnungen 123 und 124, der Wärmetauscher 122 über Öffnungen 125 und 126 aus dem rohrartigen
Wandungsteil nach außen geführt und in nicht dargestellter Weise
an entsprechenden Zu- und Ableitungen für die von ihnen durchströmten Wärmeübertragungsfluide angeschlossen. Die Oberflächen
der Wärmetauscher 121 und 122 in den Kammern 119 und 12o sind
vorzugsweise eingeschwärzt.

Das Gehäuse des Motors besteht aus einem wärmeisolierenden Material oder ist mit einer Wärmeisolierungsschicht überzogen. Im
Inneren sind das Gehäuse sowie die Trennwandung 118 mit einer
Wärmereflexionsschicht 127 versehen.

Der Motor ist in den Fig. 17 und 18 während seines Betriebes gezeigt. Hierbei wird der die Kammer 119 durchsetzende Wärmetauscher 121 wie durch den mit "1heiß" bezeichneten Pfeil angedeutet, mit einem heißem Wärmeübertragungsfluid beschickt, das nach Abgabe seiner Wärme an den Rotor, wie durch den Pfeil "2warm" angedeutet, aus diesem wieder austritt. Der die Kammer 12o durchsetzende Wärmetauscher 122 wird wie durch den Pfeil "sehr kalt3" angedeutet, mit einem stark gekühlten Wärmeübertragungsfluid beschickt, das nach einer Wärmeaufnahme von dem Rotor, wie durch den Pfeil "kalt4" angedeutet, nach einer Erwärmung wieder aus dem Motor austritt. Man erkennt aus den Pfeilen, daß die beiden Wärmeübertragungsfluide den Rotor im Gegenstrom durchsetzen, so daß an beiden Enden beider Kammern jeweils eine große Temperaturdifferenz besteht. Durch die Erwärmung der in der Kammer 119 gerade befindlichen Rotorteile werden die zugehörigen Thermobimetallstreifen 115 c, 115 b, 115 a und 115 h in zunehmenden Maße derart verbogen, daß die an ihnen angebrachten Zusatzmassen 116c, 116 b, 116 a, 116 h und 117 c, 117 b, 117 a, 117 h einen zunehmend größeren Abstand von der Welle 1o6 einnehmen. In der Kammer 12o findet dagegen eine Abkühlung statt, so daß die gerade dort befindlichen Thermobimetallstreifen 115 g, 115 f, 115 e und 115 d in der genannten Reihenfolge zunehmend dahingehend verbogen werden, daß die an ihnen befestigten Zusatzmassen 116 g, 116 f, 116 c, 116 d und 117 g, 117 f, 117 c, 117 d zunehmend abgesenkt, d.h. in Richtung auf die Welle bewegt werden. Dieser Vorgang ist deutlich aus den Figuren 17 und 18 ersichtlich. Durch diese Massenanhebung und Massenabsenkung entsteht eine Massenverschiebung, die durch das mit $D_m$ angedeutete Massenverschiebungsoval wiedergegeben ist und eine Drehung des Rotors im Uhrzeigersinne hervorruft. Mit e ist die entsprechende Exzentrizität des Rotors wiedergegeben, die dieser aufgrund der Temperaturunterschiede bei dem in den Figuren gezeigten Betriebszustand aufweist.

Wenn die Thermobimetallstreifen umgekehrt wie im dargestellten Falle montiert sind, kommt es im Bereich der Wärmesenke zu einer Anhebung und im Bereich der Wärmequelle zu einer Absenkung derselben, so daß die Beschickung der Wärmetauscher 121 und 122 mit einem heißen bzw. kalten Medium umgekehrt wie im vorstehend beschriebenen Fall zu erfolgen hat, wenn die gleiche Drehrichtung erwünscht ist.

Eine umgekehrte Bewegungsrichtung in dem Motor läßt sich dadurch erzielen, daß man in jedem der Wärmetauscher 121 und 122 den Eingang und Ausgang für das entsprechende Wärmeaustauschfluid gegeneinander vertauscht.

Die Thermobimetallstreifen können selbstverständlich an der Rotorscheibe auch auf andere Weise befestigt sein, beispielsweise durch Kleben oder Schweißen. Des weiteren können anstelle einer Rotorscheibe eine Rotorwalze, ein Ring-Traggerüst oder eine andere Halterung vorgesehen werden, welche die Thermobimetallstreifen in einem entsprechenden Abstand von der Achse haltern.

Der Temperaturverlauf in dem Motor ist durch das an der linken unteren Ecke von Fig. 17 gezeigte Diagramm wiedergegeben, wobei die mit 1 bis 4 bezeichneten Ecken die Ein- und Auslaßtemperaturen der Wärmetauscher 121 und 122 wiedergeben gemäß den Ziffern an den vorstehend erwähnten Pfeilen.

Während die Figuren 17 und 18 ein Beispiel eines Motors wiedergeben, bei dem das Drehmoment durch Massenanhebung und Massenabsenkung erreicht wird, zeigen die Figuren 19 und 2o ein Beispiel eines Motors, bei dem das Drehmoment im wesentlichen durch Massenverdichtung und Massenverdünnung erzeugt wird.

Der Motor der Figuren 19 und 2o enthält ein Gehäuse aus plattenartigen Wandelementen 128. und 129 aus einem thermisch isolierenden Material, Ringelementen 13o bis 132, ebenfalls aus einem wärmeisolierenden Material, und Seitenwandungen 134 und 135, die beispielsweise aus Metallblech bestehen und an ihren unteren Enden
Standfüße 136 und 137 enthalten, die mit Bohrungen 138 und 139
für die Aufnahme von Befestigungsbolzen versehen sind. Die Wandelemente, Ringelemente und Seitenwandungen werden mittels Verbindungsbolzen 14o bis 143 zusammengeschraubt, welche sich durch
mit einander fluchtende Bohrungen der entsprechenden Bauelemente
erstrecken. Die Seitenwandungen 134 und 136 enthalten in ihrer
Mitte von Flanschen 145 und 146 begrenzte Öffnungen, in denen
Kugellager 147 und 148 aufgenommen sind. In den Kugellagern 147
und 148 ist über Lager- und Distanzhülsen 149 und 15o eine
mit einer Polygonprofilierung versehene Welle 151 drehbar gelagert, wobei in die Lager- und Distanzhülsen 149 und 15o eingreifende Fixierringe 152 und 153 und an der Welle angreifende
Fixierringe 154 und 155 eine Verschiebung der Welle 151 in
axialer Richtung verhindern. Zwischen den Lager- und Distanzhülsen 149 und 15o, d.h. im Inneren des Gehäuses, sind auf der
Welle 151 alternierend Rotoren 155 a, 155 b, 155 c und 155 d,
sowie Distanzhülsen 156 a, 156 b und 156 c angebracht. Die
Rotoren bestehen, wie am besten aus Fig. 19 hervorgeht, aus
einem nabenartigen auch als "Grundrotor" bezeichneten, auf
die Welle 151 aufgesteckten Bereich 157 und in diesem, beispielsweise über in gleichen Winkelabständen angeordnete,
radial verlaufenden Schlitzen gehalterte Speichen 158 a bis
158 h, die aus gleich angeordneten Thermobimetallstreifen bestehen und an ihren freien Enden Zusatzmassen 159 a bis 159 h
tragen. Die Thermobimetallstreifen sind auch hier so angeordnet,
daß ihre Trennfläche zwischen den beiden Metallschichten unterschiedlicher thermischen Ausdehnung parallel zur Längsachse 2
der Welle 151 verlaufen.

Man erkennt aus Fig. 2o, daß die Distanzhülsen 156 a und 156 c
zwischen den Rotoren 155 a und 155 b bzw. zwischen den Rotoren
155 c und 155 d breiter sind als die Distanzhülse 156 b zwischen den Rotoren 155 b und 155 c. Die breiteren Distanzhülsen 156 a und 156 c ermöglichen die Anbringung von Wärmetauschern
16o und 161 zwischen den Rotoren 155 a und 155 b bzw. 155 c
und 155 d. Die Wärmetauscher 16o und 161 bestehen aus Wärmetauscherplatinen 162, welche zwischen die Ringelemente 13o
131 und 132 eingeklemmt sind und den gesamten Querschnitt des
Motorinnenraumes ausfüllen. Die Platinen jedes Wärmetauschers
sind mit über die Oberfläche der Ringelemente hinausstehenden
Anschlußflanschen 163 bzw. 163' und 164 versehen, von denen
Zuführungskanäle 165 und 166 zu dem Anfang und dem Ende eines
meanderartig um die Welle und bis an diese heranreichenden
Medienkanals 167 führen.

Bei den in den Figuren 19 und 2o dargestellten Wärmetauschern
16o und 161 ist in den Medienkanal 167 eine Expansionsdüse
168 eingesetzt, welche den Medienkanal 167 in zwei annähernd
gleiche Hälften unterteilt. Der Anschlußflansch 163 ist über
eine lediglich angedeutete Leitung 169 an dem Ausgang eines
Verdichters 17o angeschlossen, der von dem Motor selbst oder
einem in der Zeichnung nicht dargestellten Startmotor angetrieben wird. Der zweite Anschlußflansch 164 ist über eine
Leitung 171 an einen Wärmetauscher 172 angeschlossen, von dem
eine Leitung 173 zu dem Verdichter 17o führt. In den Wärmetauscher 172 mündet eine Wärmezuführung, die im dargestellten
Falle von einer stormdurchflossenen Heizschlange 174 gebildet
ist und,wie durch den Pfeil 175 angedeutet, dem System Energie
zuführt.

Der aus der Leitung 169, dem Anschlußflansch 163, dem Zuführrungskanal 165, dem mit der Expansionsdüse 168 versehenen Medienkanal 167, dem Zuführungskanal 166, dem Flansch 164, der
Leitung 171, dem Wärmetauscher 172 und der Leitung 173, sowie
dem Verdichter 17o gebildete Kreislauf stellt einen Wärmepumpenkreislauf dar, mit dem eine Wiedergewinnung d.h. ein
Recycling,der dem Rotor entzogenen Energie möglich ist.Bei dem
Betrieb des Motors wird das durch den Verdichter 17o erhitzte Wärmeübertragungsfluid über die Leitung 169, den Anschlußflansch 163, den Zurführungskanal 165 und den anschließenden
Teil des Medienkanals 167 zugeführt. Das Wärmeübertragungsfluid kühlt sich in dem Medienkanal 167 kontinuierlich ab ,
in dem es seine Wärme auf den Rotor überträgt. Nach dem
Durchtritt des Wärmeübertragungsfluids durch die Expansionsdüse 168 wird das Wärmeübertragungsfluid stark abgekühlt,
so daß es bei seinem Durchlauf durch den Rest des Medienkanals 167 als Wärmesenke dient und dem Rotor Wärme entzieht,
bevor es über den Zuführungskanal 166, den Flansch 164 in
die Leitung 171 austritt und in dem Wärmetauscher 172 Wärme
aufnimmt. Diese Wärmeaufnahme erfolgt bei laufendem Motor
und in den Wärmeaustauscher 172 stark abgekühlt eintretendem
Wärmeübertragungsfluid im wesentlichen durch Aufnahme von
Umweltwärme, wie dies im Pfeil 176 angedeutet ist. Die von
der Heizschlange 174 zugeführte und mit dem Bezugszeichen
175 angedeutete Wärmezufuhr kann hierbei weitgehend zurücktreten und bei sehr günstigen Wirkungsgraden auch vollständig entfallen.

Um eine gleichmäßige Erwärmung auch der am Rande des Motors
liegenden Rotoren 155 a und 155 d zu erreichen, sind die den
Rotoren gegenüberliegenden Bereiche der plattenartigen Wandelemente 128, 129 mit einer Wärmereflexionsschicht 177 versehen.

Der in den Figuren 19 und 2o gezeigte Motor kann dahingehend
abgewandelt werden, daß anstelle des mit der Expansionsdüse
168 versehenden durchlaufenden Medienkanals 167 die Wärmetauscher 16o und 161 durch zwei mit je einer Zu- und einer
Ableitung versehene unabhängige Medienkanäle versehen werden,
welche im Zusammenwirken mit einem Wärmepumpenkreislauf oder
unabhänig von einem solchen mit einem heißen und einem kalten
Wärmeübertragungsfluid beschickt werden.

Bei dem vorstehend beschriebenen Motor werden,wie aus Fig.
19 ersichtlich, durch die Erhitzung im ersten Teil des Medienkanals eine Massenverdünnung und durch die Abkühlung im zweiten
Teil des Medienkanals 167 eine Massenverdichtung hervorgerufen,
welche zu der mit e bezeichneten Exzentrizität des Rotors führen
und hierdurch ein Drehmoment erzeugen, das den Motor im Uhrzeigersinne dreht. Bei umgekehrtem Einbau der Thermobimetallstäbe oder
bei umgekehrter Anordnung von Wärmequelle und Wärmesenke ergibt
sich die umgekehrte Drehrichtung.

An der linken unteren Ecke von Fig. 19 ist ein Diagramm wiedergegeben, das den Temperaturverlauf in dem Motor in Abhängigkeit
von der Wärmetauscherlänge zeigt. Mit "1" und "2" sind darin die
Anschlußtemperaturen wiedergegeben. Man erkennt besonders
deutlich den im Bereich der Expansionsdüse 168 stattfindenden
Temperatursprung.

Die Figuren 21 und 22 zeigen Varianten des in den Figuren 19
und 2o gezeigten Motors, bei dem das Drehmoment durch eine
Massenverdichtung und eine Massenverdünnung erzeugt wird,wobei
denen das Erwärmen und Abkühlen der verschiedenen Bereiche des
Rotors anstatt durch Strahlungsaustausch durch Medienaustausch
mittels zumindest eines Wärmeübertragungsfluids erfolgt. Der
Motor besteht aus zwei miteinander verschraubten Einheiten,
einem Wandlermodul 18o und einem Heizmodul 181.

Der Wandlermodul 18o enthält ein Gehäuse, das aus zwei die
Stirnflächen bildenden, aus einem wärmeisolierenden Material
bestehenden plattenartigen Wandelementen 182, 183 besteht, auf
die außen vorzugsweise aus Metall bestehende Seitenwandungen
184,185 aufgebracht sind. Die Seitenwandungen 184 und 185
münden an ihren unteren Enden in mit Befestigungsbohrungen
versehene Standfüße 186 und 187. Zwischen den plattenartigen
Wandelementen ist ein ebenfalls aus wärmeisolierendem Material bestehendes rohrartiges Wandungsteil 192 mit kreiszylindrischem Querschnitt angebracht. Die Seitenwandungen 184 und 185, die plattenartigen Wandelemente 182, 183 und das rohrartige Wandungsteil 192 sind mittels Verbindungsbolzen 188 bis 191 zusammengeschraubt, welche sich von der Seitenwandung 184 durch miteinander fluchtende Bohrungen in derselben, in dem plattenartigen Wandelement 182, in dem rohrartigen Wandungsteil 192, in dem plattenartigen Wandungsteil 183 und der Seitenwandung 185 erstrecken und mittels Muttern zusammengepreßt sind. Im Inneren des Gehäuses können zusätzliche in der Zeichnung nicht dargestellte Wärmereflexionsschichten angebracht sein. Die Seitenwandungen 184 und 185 sind in ihrer Mitte mit Bohrungen versehen, welche an der Außenkante mit Bünden 193 und 194 ausgestattet sind, mittels derer in den Bohrungen angebrachte Kugellager 195, 196 an einem nach Außenrutschen gehindert sind. In dem inneren Laufring der Kugellager 195 und 196 ist eine Polygon-Welle 197 gehaltert, die durch Fixierungsringe 198,199 an einer Axialverschiebung gehindert ist. Auf der Welle 197 sind anschließend an die Lager Distanzblöcke 2oo und 2o1 aufgeschoben, die knapp bis ins Innere des Gehäuses reichen. Auf dem im Gehäuse liegenden Teil der Welle 197 sind alternierend Rotorscheiben 2o2 a... 2o2n und Distanzscheiben 2o3a.. 2o3n-1 angebracht. Die Rotorscheiben 2o2a bis 2o2n entsprechen in ihrem Aufbau den Rotorscheiben 155 a bis 15o d der in den Figuren 19 und 2o dargestellten Ausführungsform mit der Ausnahme, daß hier eine größere Anzahl von aus Thermobimetallstreifen bestehenden Speichen und an diesen befestigten Zusatzmassen vorgesehen sind, im dargestellten Beispiel 24 anstelle von 8, wobei hiermit lediglich ein Beispiel und nicht die bei praktischen Ausführungsformen verwendete Maximalzahl angegeben ist. Die Zahl der Speichen soll so groß sein, daß die Speichen in möglichst dichter Packung über den Kreisumfang angeordnet sind, so daß sie sich gerade nicht in ihrer Bewegung stören. Die große Speichenzahl bezweckt, daß bei der im folgenden noch näher erläuterten Durchleitung eines heißen und eines kalten Wärmeübertragungsfluids durch den
Rotor diese Fluide möglichst wenig vermischt werden.

Anstelle oder zusätzlich zu den Distanzscheiben 2o3 a bis
2o3 n-1 können auch Distanzscheiben 21o verwendet sein,
die gegebenenfalls wie bei dem in Fig. 2o gezeigten Beispiel
zwischen entsprechende Ringelemente der Außenwandung eingespannt sein können. Die Distanzscheiben 21o weisen zwei
einander diametral gegenüberliegende ringsegmentartige Öffnungen 2o4 und 2o5 auf, wie sie in Fig. 21 gezeigt sind,
wobei aufeinanderfolgende Distanzscheiben so angeordnet sind,
daß diese ringsegmentartigen Öffnungen 2o4 und 2o5 über die
ganze Länge des Wandlermoduls 18o miteinander fluchten und
Führungskanäle für die Wärmeübertragungsfluide bilden. Im
Bereich der segmentartigen Öffnungen 2o4 und 2o5 können die
Distanzscheiben 21o als Leitblenden ausgebildet sein, so daß
die den Wärmeübertragungsmedien innewohnende Energie auf die
Rotorscheiben abgegeben und damit ein zusätzliches Drehmoment
erzeugt wird. Die Öffnungen 2o4 und 2o5 fluchten auch mit
entsprechend geformten Öffnungen 2o6 und 2o7 in der Seitenwandung 184 und dem plattenartigen Wandelement 182, sowie entsprechende Öffnungen 2o8 und 2o9 in der Seitenwandung 185.
und dem plattenartigen Wandelement 183. Durch die Öffnungen
2o6 bis 2o8 strömen die Wärmeübertragungsfluide in den Wandlermodul ein bzw. aus diesem heraus.

Der Wandlermodul 18o erlaubt vielfältige Verwendungsmöglichkeiten
von denen einige in den Figuren 21 mit 24 dargestellt sind.

In Fig. 22 ist an den Wandlermodul 18o der Heizmodul 181
mittels einer Seitenwandung 211 angeflanscht, die entsprechend
wie die Seitenwandung 185 ausgebildet ist, jedoch ohne entsprechenden Standfuß. Die Seitenwandung 211 bildet einen Teil
eines Grundgehäuses 212, das einen im wesentlichen U-förmig
in sich zurückgebogenen, mit seinen Enden mit den Öffnungen 2o8 und 209 fluchtenden Kanal 213 enthält, der außen mit einer
Wärmeisolierung 214 versehen ist. In die Mitte des Kanales
mündest die Welle 197, an deren Ende, nach Zwischenschaltung
einer Distanzscheibe 215, eine Tangentialturbine mit Fluidstromführungsblende 216 über eine Hülse 217 aufgesteckt ist. Die Tangentialturbine ist in einer am freien Ende der Welle 197 axial
eingesenkte Gewindebohrung mittels einer Befestigungsschraube 218
und einer Sicherungsscheibe 219 befestigt. Die Tangentialturbine 216
erstreckt sich bis nahe an den Scheitel des U-förmigen Kanales 213.
In dem der Öffnung 208 des Wandlermoduls zugekehrten Bereich des
Kanales 213 sind Beheizungsvorrichtungen angebracht. Sie können, wie in Fig. 22 gezeigt, ein von einem Wärmeübertragungsfluid
beaufschlagter Wärmetauscher 220 sein, anstelle dessen jedoch
auch eine stromdurchflossene Heizspule verwendet werden kann.
Der Wärmetauscher 220 kann, wie in Fig. 21 dargestellt, über
Zuleitungen 222 und 223 an einen Konvektionskreislauf 224
einer Solarheizung angeschlossen sein, die über einen Kollektor 225 und ein Motorstellventil 226 die notwendige Wärmezufuhr bewirkt. Die unterschiedliche Wärmezufuhr läßt sich mittels
eines Wärmespeichers ausgleichen, der nicht dargestellt ist. Der
Temperaturverlauf im Wärmetauscher 220 ist in Fig. 21 rechts unten
in Form eines Schemas dargestellt.

Anstelle des Wärmetauschers 220 oder zusätzlich zu diesem können ein Brenner 227 und eine mit diesem zusammenarbeitende
elektrische Zündung 228 in dem Fluidstrom des Heizmoduls vorgesehen sein, mittels derer ein brennbares Gas oder ein fester
bzw. flüssiger Brennstoff eingeführt und verbrannt wird.

Bei dem Betrieb des aus dem Wandlermodul 180 und dem Heizmodul 181 bestehenden Motors wird, wie durch den Pfeil 229 angedeutet, ein Kühlfluid, z.B. kalte Luft, mit der Temperatur $t_1$ über
die Öffnung 207 angesaugt, was bei der Inbetriebnahme des Motors
über einen nicht dargestellten mit der Antriebswelle verbundenen
Startmotor oder einer der mit Antriebswelle verbundenen Handkurbel erfolgt. Die kalte Luft durchläuft den Wandlermodul in
seinem unteren Bereich, wobei sie die dort befindlichen Speichen der Rotorscheiben abkühlt und sich dabei auf eine Tempera-

tur $t_2$ erwärmt. Sie tritt über die Öffnung 2o9 aus dem Wandlermodul aus und gelangt über den Kanal 213 in den Bereich des
Wärmetauschers 22o und/oder des Brenners 227 wo sie erhitzt
und/oder verbrannt wird. Die hierdurch auf eine Temperatur $t_3$
erhitzte Luft und/oder die Verbrennungsprodukte treten dann
über die Öffnung 2o8 abermals in den Wandlermodul ein, den sie
oben in axialer Richtung durchsetzen, wobei sie die dort befindlichen Speichen der einzelnen Rotorscheiben erwärmen, bevor sie,
wie durch den Pfeil 23o angedeutet, mit einer durch die Wärmeabgabe reduzierten Temperatur $t_4$ über die Öffnung 2o6 kalt austreten. Die Tangentialturbine 216 saugt dabei die Luft an und
führt sie zu dem Wärmetauscher oder dem Brenner. Wenn anstelle
des Brenners lediglich der Wärmetauscher 22o verwendet wird,
können auch nicht sauerstoffhaltige Gase oder andere Fluide
für die Wärmeübertragung verwendet werden. Der Motor kann
selbstverständlich auch im Zusammenhang mit Wärmepumpenkreisläufen und/oder einer Wärmerückgewinnung beispielsweise gemäß
dem Schaltschema von Fig. 14 betrieben werden.


Der Temperaturverlauf im Wandlermodul 18o ist in Fig. 22 rechts
unten dargestellt, wobei mit $T_1$ die Temperatur links, mit $T_r$
die Temperatur rechts im Wandler und mit dem Abstand $l_1$ bis $l_2$
die Länge LR des Wandlers bezeichnet wird.

Fig. 23 zeigt den Wandlermodul 18o mit einem rechts an diesen angeflanschten Ventilatormodul 232. Der Ventilatormodul 232 besteht
aus einem ringförmigen Element 234 aus einem isolierenden Material,
das von einer vorzugsweise metallenen bzw. warmfesten Wandung 233
an den Stirnseiten und Innen begrenzt ist. In seiner Mittelöffnung
und mit der Welle 197 des Motors fluchtend ist eine Axialturbine
235 an dem freien Ende der Welle 197 befestigt. Es ist selbstverständlich auch möglich, zwischen die Welle 197 und die Axialturbine 235 ein Zwischengetriebe einzuschalten, was sich immer dann
empfiehlt, wenn der Wandlermodul langsam umläuft. Gleiches gilt
selbstverständlich für alle von der Welle des Rotors angetriebenen Aggregate wie die Tangentialturbine 216 von Fig. 22,
Ventilatoren, Verdichter, Generatoren und Motoren. Bei einem
Ausführungsbeispiel von Fig. 23 wird der Wandlermodul 180
von zwei gleichgerichteten in die Öffnungen 206 und 207 eintretenden und aus den Öffnungen 208 und 209 austretenden
Fluidstömungen beschickt, deren Anfangs- und Endtemperaturen
und deren Temperaturverlauf im Inneren des Wandlermoduls in
dem rechts von Fig. 23 gezeigten Schaubild verdeutlicht ist.
Wenn die Wärmeübertragungsfluide im Wandlermodul mit einer
hohen Strömungsgeschwindigkeit zugeführt werden, kann die
den Wärmeübertragungsfluiden innewohnende Bewegungsenergie
über die Axialturbine ebenfalls an die Welle 197 abgegeben
werden. Umgekehrt ist es auch möglich, die Axialturbine 235
zum Ansaugen der Wärmeübertragungsfluide zu verwenden.

Fig. 24 zeigt den Wandlermodul 180 bei einem Gegenstrombetrieb,
bei dem das eine Wärmeübertragungsfluid über die Öffnung 206
ein- und die Öffnung 208 austritt und das andere Wärmeübertragungsfluid über die Öffnung 209 ein und über die Öffnung 207
aus dem Wandlermodul austritt. Rechts neben dem Wandlermodul
ist ein Diagramm dargestellt, das den Temperaturverlauf in
dem Motor der Fig. 24 wiedergibt.

Ein besonderer Vorteil der beschriebenen Motoren beruht darin,
daß bei ihnen die innere Reibung sehr gering ist und kleiner
als bei herkömmlichen Kolben- oder Rotationsmotoren gehalten
werden kann.

Fig. 25 zeigt ein Detail eines Rotors, bei dem das Drehmoment
um die Drehachse 2 durch eine Massenanhebung bzw. Massenabsenkung bewirkt wird. Auf einer nicht dargestellten, mit der
Drehachse 2 fluchtenden Welle ist eine Rotorscheibe 238 befestigt,
an deren in radialer Richtung äußeren Ende mittels einer durch
das Bezugszeichen 239 angedeuteten Verklebung, Verschweißung,
Schraub- oder Nietverbindung  ein Thermobimetallstreifen 240,

0008443

bezogen auf seine Längserstreckung, in der Mitte befestigt ist.
Der Thermobimetallstreifen 24o besteht aus zwei in seiner
spannungneutralen Fläche 241 beispielsweise durch molekulares
Kaltverschweißen miteinander verbundene Metallschichten 242
und 243, die eine sehr unterschiedliche thermische Ausdehnung
aufweisen. Die Oberflächen der Thermobimetallstreifen 24o
sind, wie durch das Bezugszeichen 244 angedeutet, geschwärzt.
An den freien Enden der Thermobimetallstreifen 24o sind
Zusatzmassen 245 und 246 in Form von rechteckförmigen Gewichten angebracht, wobei die Verbindungen zwischen den Zusatzmassen und den Thermobimetallstreifen, wie durch die Bezugszeichen 247 und 248 angedeutet, durch Verklebungen, Preßpassung,
Verschweißung, Stauchvernietung oder ähnliches gebildet sein
können. Der Thermobimetallstreifen 24o mit den an seinen Enden befestigten Zusatzmassen 245 und 246 nimmt bei einer bestimmten, im allgemeinen der Umgebungstemperatur entsprechenden
Temperatur, eine neutrale Lage ein, bei der er senkrecht von
der Rotorscheibe absteht. Bei einer Erwärmung oder Abkühlung
des Thermobimetallestreifens 24o kommt es zu einer Verbiegung
desselben, die in Abhängigkeit davon, ob die Metallschicht 242
oder die Metallschicht 243 die stärker dehnende ist, zu der
mit voll ausgezogenen Linien von Fig. 25 gezeigten Massenanhebung oder der zu strichpunktierten angedeuteten Massenabsenkung führt. Eine Massenabsenkung wird auch als negative, eine
Massenanhebung als eine positive Verschiebung bezeichnet, wobei deren Amplitude neben der Masse des Thermobimetallstabes
und den Zusatzmassen die Größe des Drehmoments bestimmt. Man
erkennt auch aus Fig. 25, daß es für die Erzielung einer maximalen Verschiebungsamplitude wichtig ist, daß im Ansatzbereich
des Thermobimetallstreifens 24o eine hohe Temperaturdifferenz
herrscht, wobei optimale Ergebnisse erzielt werden, wenn der
gesamte Thermobimetallstreifen einer großen Temperaturdifferenz
unterzogen wird. Eine starke Erwärmung des Thermobimetallstreifens lediglich im Außenbereich würde dagegen nur zu einer
kleineren Verschiebung und damit zu einem kleineren Drehmoment
führen.

In Fig. 26 ist eine Detailansicht eines Rotors dargestellt, bei dem das Drehmoment durch Massenverdichtung bzw. Massenverdünnung erzielt wird. Der nabenartige Bereich 251 der Rotorscheibe enthält n in gleichen Winkelabständen $\alpha$ von einander angeordnete radial verlaufende Schlitze 252, in welche die Enden von n Bimetallstreifen gehaltert sind. Die Zeichnung zeigt lediglich zwei derselben die durch die Bezugszeichen 255 und 256 gekennzeichnet sind. Die Bimetallstreifen sind identisch aufgebaut wie der Bimetallstreifen 24o von Fig. 25, so daß hierauf nicht näher eingegangen werden muß. Gleiches gilt für entsprechende Zusatzmassen 257 und 258. Die spannungsneutralen Flächen 259 und 26o der Bimetallstreifen 255 und 256 liegen im temperaturneutralen Zustand, d.h. dann wenn die Thermobimetallstreifen 255 und 256 geradlinig sind, in Ebenen, welche die Drehachse und einen von dieser ausgehenden Radiusvektor enthalten. Die bei einer Erwärmung bzw. Abkühlung der Thermobimetallstreifen 255 und 256 auftretenden Verbiegungen finden in einer senkrecht zur Drehachse 2 liegenden Ebene statt, wobei die Richtung der jeweiligen Verschiebung davon abhängt, welche der Metallschichten der Thermobimetallstreifen, bezogen auf die Drehachse, im Uhrzeigersinne oder gegen den Uhrzeigersinn gerichtet eingebaut sind. Die anhand von Fig. 25 bezügl. der Amplitude und des Drehmoments gemachten Ausführungen gelten auch hier entsprechend.

In Fig. 27 ist ein Typ eines Rotors dargestellt, bei dem ausgehend von dem eine zentrale Ausnehmung 263 für die Aufnahme der Welle umgebenden Nabenbereich 264 kreissektorenartige Flügel 265 a .. 265 n.. angeordnet sind. Die Flügel sind jeweils gleich dimensioniert, wobei ein Vielfaches des von ihnen und ihrem Zwischenabstand eingenommenen Winkelbereichs $\alpha$ den Vollkreis bildet. Die Flügel 265 a.. bestehen aus einem Thermo-Bimetall oder einem Material mit großer thermischer Längsausdehnung, wobei die Trennfläche der beiden Schichten mit der Zeichenebene zusammenfällt. An ihren Enden sind Zusatzmassen 266a bis 266 n. angebracht.

Die Flügel 265 a.. sind des weiteren zur verbesserten Wärmeaufnahme und Abgabe auf ihrer Oberfläche geschwärzt oder mit einer strahlungsselektiven Oberflächenschicht versehen. Die Beaufschlagung dieses Rotors mit einem Wärmeübertragungsfluid erfolgt in Richtung der Pfeile 267 und/oder 268, je nach dem, ob lediglich auf einer Seite erwärmt oder auf einer Seite gekühlt oder ob auf einer Seite erwärmt und auf der anderen Seite gekühlt wird. Der Rotor der Fig. 27, dessen Flügel zudem angestellt, d.h. aus der Rotorebene herausgedreht sein können, eignet sich besonders als Ventilator oder Lüfter, wobei zu seinem Antrieb, neben dem Drehmoment, das von den temperaturbedingten radialen Verschiebungen der Flügel und der Zusatzmassen herrührt, auch die dem strömenden Wärmeübertragungsfluid entzogene Bewegungsenergie beiträgt.

In Fig. 28 ist eine Variante des in Fig. 27 gezeigten Rotors angedeutet, bei der auf einer polygonalen Welle mit gleichseitigen Kanten eine deren Anzahl entsprechende Zahl von geradlinigen Stäben hintereinander angeordnet ist, von denen die senkrecht zueinander verlaufenden Stäbe 270 und 271 angedeutet sind. Die Stäbe sind jeweils um den Winkel $\alpha$ versetzt gegeneinander angeordnet. An den Enden der Stäbe sind ebenfalls Zusatzmassen angebracht, von denen lediglich die Zusatzmassen 272 und 273 des Stabes 270 gezeigt sind. Die Stäbe selbst bestehen aus Thermo-Bimetallen oder einem Material mit großen thermischen Längsausdehnungskoeffizienten. Die Beaufschlagung des Rotors mittels Wärmeübertragungsfluiden erfolgt entsprechend dem Beispiel von Fig. 27 in tangentialer Richtung längs des Pfeiles 274 und/oder des Pfeiles 275. Die möglichen radialen Verschiebungen der einzelnen Stäbe sind am rechten Ende der Fig. 28 schematisch dargestellt. Auch die bei dem Beispiel von Fig. 28 verwendeten Stäbe sind zur verbesserten Wärmeübertragung an der Oberfläche eingeschwärzt oder mit einer strahlungsselektiven Oberflächenschicht versehen.

0008443

Fig. 29 zeigt ein Beispiel für die Anbringung der Zusatzmassen auf den freien Enden von gemäß Fig. 28 verwendeten Rotorstäben. An dem freien Ende eines Stabes 276 ist an dessen Oberseite als Zusatzmasse ein Klötzchen 277 befestigt, wobei dies zb. mittels Aufkleben ,Aufnieten , Aufschweißen, Auflöten durchgeführt werden kann.

Fig. 3o zeigt eine weitere Variante für die Erzeugung der Zusatzmassen, bei der das freie Ende eines Stabes 278, wie durch das Bezugszeichen 279 angedeutet, mehrfach umgefalzt ist. Die Anbringung von Zusatzmassen gemäßt Fig. 29 ist auch möglich, wenn der Stab aus Thermobimetallen besteht. Die Ausgestaltung gemäß Fig. 3o eignet sich jedoch besser für Monometallstäbe.

Fig. 31 zeigt einen weiteren Motor, der ähnlich aufgebaut ist wie derjenige von Fig. 2o. Der Motor enthält ein Gehäuse, das aus zwei isolierenden mittig von einer Abtriebswelle 281 durchsetzten plattenartigen Wandelementen 282 und 283 besteht, zwischen denen ein rohrartiges Wandungsteil 284 eingespannt ist. Das Gehäuse ist in nicht näher dargestellter Weise wärmeisoliert und innen gegebenenfalls mit einer ebenfalls nicht dargestellten Wärmereflexionsschicht versehen. Die Welle 281 trägt im Inneren des Gehäuses, von Fixierrungsringen 285 und 285 a gegen eine axiale Verschiebung geschützt, zwei Rotorscheiben 286 und 287 , welche entsprechend ausgebildet sein können wie die Rotorscheiben ·155 a bis 155 d von Fig. 2o oder die Rotorscheiben 2o2 a ...2o2 n von Fig. 21. Im Gegensatz zu den dort beschriebenen Rotoren sind bei dem in Fig. 31 gezeigten Beispiel in der Rotorscheibe 286 die Biegerichtung der Speichen aus Thermobimetallstreifen umgekehrt wie in der Rotorscheibe 287 orientiert. Dies bedeutet, daß in der Rotorscheibe 286 beispielsweise die stärker dehnende und stärker schrumpfende der Metallschichten der Thermobimetallspeichen bei einer Aufsicht auf den Rotor in axialer Richtung im Uhrzeigersinne weist, während sie bei gleicher Betrachtungsrichtung in der Rotorscheibe 287 im Gegenuhrzeigersinne weist. Die Rotorscheiben 286 und 287 sind
mittels eines auf die Achse aufgeschobenen Distanzblockes
288 so weit voneinander getrennt, daß zwischen sie als Wärmetauscher zwei Peltierelemente 289 und 290 eingeschoben werden können. Die Peltierelemente 289  und 290 sind jeweils
an eine Gleichspannungsquelle, wie in Fig. 31 gezeigt, angeschlossen. Durch den in den Peltierelementen fließenden
Strom kühlt sich deren eine Seitenfläche ab, während sich
deren andere Seitenfläche erhitzt. Das Peltierelement 289
entzieht daher der Rotorscheibe 287 im unteren Bereich, wie
durch den Pfeil 291 angedeutet, Energie, während es wie
durch den Pfeil 292 angedeutet, dem unteren Teil der Rotorscheibe 286 Energie zuführt. Das Peltierelement 290 entzieht
umgekehrt, wie durch den Pfeil 293 angedeutet, der Rotorscheibe 286 im oberen Bereich Energie, während es der Rotorscheibe
287 wie durch den Pfeil 294 angedeutet, im oberen Bereich
Energie zuführt. Da die Thermobimetallstreifen in den Rotorscheiben 286 und 287 entgegengesetzt zueinander angeordnet
sind,bewirkt eine Abkühlung in der Rotorscheibe 286 die
gleiche Massenverschiebung wie eine Erwärmung in der Rotorscheibe 287 und umgekehrt. Wenn daher beispielsweise im oberen Bereich des Motors eine Massenverdichtung stattfindet,
kommt es im unteren Bereich des Rotors zu einer Massenverdünnung oder umgekehrt. Die Peltierelemente können auch aus aneinander gereihten Sektoren zusammengesetzt sein.

Gemäß einer nicht explizit dargestellten Variante der Fig. 31
enthält der Motor nur oben das Peltierelement 290. Statt das
Peltierelement 291 enthält das Rotorgehäuse unten eine Wärmeausgleichsflüssigkeit, die eine Temperaturkompensation in den
Thermobimetallspeichen herstellt, so daß nur eine einseitige
Energiezufuhr bzw. -abfuhr zu erfolgen hat.

Die Fig. 32 zeigt eine Möglichkeit zur direkten elektrischen
Beheizung diskreter Bereiche der Rotorscheiben. Auf der an
einer Welle 296 gelagerten Rotorscheibe 297, bei der aus Gründen der Übersicht alle aus Bimetallstreifen bestehenden Speichen mit Ausnahme der einen mit 298 bezeichneten weggelassen sind, ist an jeder der Speichen im unteren an die Nabe angrenzenden Bereich, wie dies für die Speiche 298 gezeigt ist, eine Spule 299 angebracht. Das eine Ende der Spule ist an die Welle 296 angeschlossen, wo es über einen Schleifkontakt 3oo mit einem Pol 3o1 einer Spannungsquelle verbunden ist. Das andere Ende der Spule 299 ist mit einem Schleifkontakt 3o2 versehen, der bei einer bestimmten Drehstellung der Rotorscheibe 297 mit einem fest angebrachten Kontakt 3o3 in Berührung tritt. Der Kontakt 3o3 ist an den anderen Pol 3o4 der Spannungsquelle angeschlossen. Bei einer Drehung der Rotorscheibe 297 gelangen somit nacheinander die Schleifkontakte 3o2 der einzelnen Spulen 299 für eine kurze Zeit in Eingriff mit dem Kontakt 3o3, so daß während dieser Zeit ein Strom durch die Spule 299 fließt, der sie auf Grund ihres ohmschen Widerstandes und auf Grund ihrer Induktivität erhitzt. Hierdurch wird die Speiche 298 ebenfalls erhitzt, so daß sie die erwünschte Verbiegung durchführt.

Eine ähnliche Anordnung zeigt Fig. 33. Hier werden die Speichen einer Rotorscheibe 3o6, von der ebenfalls zur Vereinfachung lediglich eine einzige Speiche 3o7 dargestellt ist, durch den ohmschen Widerstand eines Stromes beheizt, der über Schleifkontakte 3o8 und 3o9 während des Durchlaufens der Rotorscheibe 3o6 durch einen bestimmten Drehwinkel fließt, in dem die Schleifkontakte 3o8 und 3o9 mit ortsfesten Kontakten 31o und 311 in Verbindung treten, die an den Polen 312 und 313 einer Spannungsquelle angeschlossen sind.

In dem in Fig. 34 gezeigten Schaltdiagramm wird der Rotor 1 zur Erzeugung von Elektrizität mittels eines Peltierelements 315 verwendet. Der Rotor 1 treibt über seine Welle 2 einen Wärmepumpenverdichter 316 an, von dem eine Leitung 317 zu einem ersten Wärmetauscher 318 führt, der mit einer Seitenfläche des Peltierelements 315 in Wärmeaustausch steht. Vom
Wärmetauscher 318 führt eine Leitung 319 zu einem zweiten
Wärmetauscher 32o, der dem oberen Bereich des Rotors, wie
durch den Pfeil 321 angedeutet, Wärme zuführt. Von dem
Wärmetauscher 32o führt eine Leitung 322, in der ein Expansionsventil 323 angeordnet ist, zu einem dritten Wärmetauscher 324, der mit der anderen Seite des Peltierelements 315
im Wärmeaustausch steht. Von dem Wärmetauscher 324 führt eine
Leitung 325 zu einem vierten Wärmetauscher 326, der, wie durch
den Pfeil 327 angedeutet, dem unteren Bereich des Rotors 1
Wärme entzieht. Von dem Wärmetauscher 326 führt eine Leitung
328 zu der Primärseite eines Gegenstromwärmetauschers 329,
von dem eine Leitung 33o wieder zu dem Wärmepumpenverdichter
316 zurückführt. Dem Gegenstromwärmetauscher 329 wird, wie
durch den Pfeil 331 angedeutet, sekundärseitig ein heißes
Medium zugeführt, das aus ihm, wie durch den Pfeil 332 angedeutet, wieder austritt. Das Peltierelement 315 enthält
zwei Anschlußklemmen 333 und 334, denen, wie durch den Pfeil
335 angedeutet, Leistung entnommen werden kann.

Bei dem Betrieb dieser Vorrichtung wird das über die Leitung
328 dem Gegenstromwärmetauscher 329 zugeführte warme Wärmeübertragungsfluid von der dem Gegenstromwärmetauscher 329
sekundärseitig zugeführten Wärme aufgeheizt und anschließend
über die Leitung 33o dem Wärmepumpenverdichter 316 zugeführt,
der es durch die an ihn geleitete mechanische Energie weiter
erhitzt. Das Wärmeübertragungsfluid strömt dann durch die
Leitung 317 in sehr stark erhitztem Zustand zu dem ersten
Wärmetauscher 318, so daß die eine Seite des Peltierelements
315 sehr heiß gehalten wird. Das Wärmeübertragungsfluid strömt
anschließend über die Leitung 319 zu dem zweiten Wärmetauscher
32o, der den oberen Bereich des Rotors 1 erhitzt. Anschließend
strömt das abgekühlte Wärmeübertragungsfluid über die Leitung
322 zu dem Expansionsventil 323, wodurch das Wärmeübertragungsfluid stark abgekühlt wird, bevor es in den dritten Wärmetauscher 324 eintritt, wo es die zweite Seite des Peltierelements 315 auf einer niedrigen Temperatur hält. Das noch immer sehr kalte Wärmeübertragungsfluid strömt anschließend über die Leitung 325 zu dem vierten Wärmetauscher 326 und kühlt den unteren Bereich des Rotors, bevor es etwas erwärmt über die Leitung 328 wieder zum Gegenstromwärmetauscher 329 fließt. Da in dem Rotor nur geringe Wärmeverluste auftreten und die dem Rotor entzogene Wärme durch Recycling wieder zurückgeführt wird, genügt der ansich geringe Wirkungsgrad des Peltierelements, um mit der entsprechend dem Pfeil 331 zugeführten Energie an den Klemmen 333 und 334 einen relativ großen Strom zu erzeugen, wie dies durch den Pfeil 335 angedeutet ist.

Fig. 35 zeigt eine Variante des in Fig. 34 gezeigten Gruppenschaltbildes. Über die Welle 2 treibt der Rotor 1 eine Pumpe 338 an, von der eine Leitung 339 zu einem ersten Wärmetauscher 34o führt, der, wie durch den Pfeil 341 angedeutet, der Umgebung Wärme entzieht. Von dem Wärmetauscher 34o führt eine Leitung 342 zu einem zweiten Wärmetauscher 343, der, wie durch den Pfeil 344 angedeutet, einem Peltierelement 345 Wärme entzieht. Von dem Wärmetauscher 343 führt eine Leitung 346 an die Stirnseite des Rotors 1 im oberen Bereich, so daß das durch die Leitung 346 herbeigeführte Wärmeübertragungsfluid, wie durch die Punktierung 347 angedeutet, den Rotor durchsetzt. Nach dem Durchsetzen des Rotors tritt das Wärmeübertragungsfluid in eine Leitung 348 ein, durchsetzt eine Pumpe 349 und gelangt über eine Leitung 35o in einen dritten Wärmetauscher 351 in dem, wie durch den Pfeil 352 angedeutet, dem Peltierelement 345 Wärme zugeführt wird. Von dem Wärmetauscher 351 führt eine Leitung 353 zu dem unteren Bereich des Rotors 1, in dessen Stirnseite sie mündet, so daß das aus ihr austretende Wärmeübertragungsfluid, wie durch die Punktierung 354 angedeutet, den Rotor 1 durchströmt. Nach dem Austritt aus dem Rotor strömt das Wärmeübertragungsfluid durch eine Leitung 355 zu der Pumpe 338 zurück. Ein Generator/Startmotor 356 wird von dem Rotor 1 über die Welle 2 ebenfalls angetrieben. Mit den beiden Klemmen 357 und 358 einer Spannungsquelle ist zum einen der Generator/Startmotor 356 verbunden, zum anderen ist über elektrische Leitungen 359 und 360 das Peltierelement 345 angeschlossen.

Zur Inbetriebnahme der Vorrichtung wird über die Klemmen 357 und 358 der Startmotor 356 erregt, so daß der Rotor 1 in Umdrehung versetzt wird. Gleichzeitig wird über die Leitungen 359 und 360 dem Peltierelement 345 Strom zugeführt, so daß dieses das in den Wärmetauscher 351 strömende Wärmeübertragungsfluid stark abkühlt und das in den Wärmetauscher 343 strömende Wärmeübertragungsfluid stark erhitzt. Das in dem Wärmetauscher 351 stark abgekühlte Wärmeübertragungsfluid strömt über die Leitung 353 in den Rotor und kühlt dessen unteren Bereich ab. Anschließend strömt es warm über die Leitung 355 in die Pumpe 338 und über die Leitung 339 zu dem Wärmetauscher 340, wo es aus der Umgebung, wie durch den Pfeil 341 angedeutet, Wärme aufnimmt. Das bereits erwärmte Wärmeübertragungsfluid strömt über die Leitung 342 zu dem Wärmetauscher 343, wo es in der vorstehend erwähnten Weise stark erhitzt wird, bevor es über die Leitung 346 zum oberen Bereich des Rotors 1 fließt und an diesen Wärme abgibt, so daß er sich dreht. Über die Leitung 348 strömt das bereits vorgekühlte Wärmeübertragungsfluid zu dem Wärmetauscher 352 zurück. Sobald die Vorrichtung in Gang gesetzt ist, kann der Startmotor 356 als Generator geschaltet werden, so daß von dem System elektrische Leistung über die Klemmen 357 und 358, wie durch den Pfeil 361 angedeutet, abgegeben werden kann.

Die Pumpen 338 und 339 können auch vom Rotor entkoppelt sein, so daß diese selbständig z.B. mittels Elektromotor angetrieben werden, was gleichzeitig die Regelfähigkeit der Anlage verbessert. Dem Generator entfällt damit die gleichzeitige Eigenschaft als Startmotor.

Fig. 36 zeigt in Vorderansicht eine Variante des in Fig. 27 gezeigten Rotors. Auf einer Nabe $363_a$, die eine Mittelbohrung 362 zum Aufstecken des Rotors auf eine Welle enthält, ist in äquidistanten Winkelabständen voneinander eine Anzahl von kreissektorartigen Bimetallstreifen $363_1$ - $363_n$ gehaltert, im dargestellten Fall 18 Stück, wobei die Trennebene zwischen den beiden Schichten unterschiedlichen thermischen Ausdehnungsvermögens in der Zeichenebene liegt. An den freien Enden tragen die Thermo-Bimetallstreifen $363_1$ - $363_n$ Zusatzmassen $364_1$ - $364_n$, die bei einer Erwärmung bzw. Abkühlung durch das Verbiegen der Thermo-Bimetallstreifen aus der in Fig. 37 gezeigten neutralen Lage in positive bzw. in negative Richtung verschoben werden. Durch diese Verschiebung ändert sich der Abstand der Zusatzmassen von der Drehachse, was zur Erzeugung des Drehmoments führt.

Fig. 38 zeigt einen Thermo-Bimetallstreifen 365, der anstelle der Thermo-Bimetallstreifen 115 des in den Fig. 17 und 18 gezeigten Rotors verwendet werden kann, wobei jedoch aus Gründen der Vereinfachung lediglich die eine Hälfte dargestellt ist. Der Thermo-Bimetallstreifen 365 ist daher bezogen auf die seine Befestigungsbohrungen $366_a$, $366_b$ durchsetzende Mittellinie MM' symmetrisch fortgesetzt zu denken. Der Thermo-Bimetallstreifen 365 ist um seine eigene Längsachse verdreht, so daß sein freies Ende 367, welches im dargestellten Falle mit Bohrungen $368_a$ und $368_b$ zur Befestigung von Zusatzmassen oder ähnlichem versehen ist, eine Winkel zu der vom Mittelbereich festgelegten Ebene einschließt, der zwischen O und $90^O$ variieren kann. Bei einer Temperaturänderung des Thermo-Bimetallstreifen 365 erfolgt die aus Fig. 38 ersichtliche Auslenkung in positiver oder in negativer Richtung aus der dargestellten neutralen Lage. Wenn der Winkel der Verdrehung $90^O$ beträgt, liegt die Trennebene zwischen den Materialien unterschiedlichen thermischen Ausdehnungsvermögens im Bereich des
freien Endes 367 des Thermo-Bimetallstreifens 365 im neutralen Zustand in einer Ebene, welche durch die Drehachse
des in den Fig. 17 und 18 gezeigten Rotors hindurchgeht,
falls der Thermo-Bimetallstreifen 365 bei dem dortigen
Rotor anstelle der Thermo-Bimetallstreifen 115 verwendet
sind. Das Drehmoment wird dann anstelle durch eine Massenanhebung und Massenabsenkung durch eine Massenverdichtung
bzw. Massenverdünnung erzeugt. Bei Verdrehungen, die unter
90° liegen, ergibt sich eine Überlagerung zwischen Massenverdichtung und Massenabhebung bzw. Massenverdünnung und
Massenabsenkung.

Eine Verdrehung der Thermo-Bimetallstreifen entsprechend
der Darstellung von Fig. 38 ist selbstverständlich auch
dann möglich, wenn die Streifen nicht wie in Fig. 38 angedeutet, symmetrisch zur Mittellinie MM' ausgebildet sind.
Derart verdrehte Thermo-Bimetallstreifen lassen sich auch
bei Rotoren verwenden, beispielsweise wie sie in den Fig.
27, 28 und 36 dargestellt sind, wobei in diesen Fällen die
Verdrehung eine Halterung an der Nabe erleichtert, und eine
dichtere Packung der Thermo-Bimetallstreifen über den
Umfang des Rotors ermöglicht.

In Fig. 39 ist ein Rotor schematisch in Seitenansicht dargestellt, bei dem auf einer Welle 370 ein aus Verstrebungen
371, 372 gebildetes Traggerüst befestigt ist, an dessen
äußerstem Ende mittels einer Halterung 373 eine aus Thermo-
Bimetall bestehende Sektorenscheibe 374 derart gehaltert
ist, daß die von ihr im temperaturneutralen Zustand eingenommene Ebene die Drehachse der Welle 370 durchsetzt. Anstelle der Sektorenscheibe 374, die aus einem Material ausgestanzt sein kann, läßt sich auch eine Rotorscheibe verwenden, wie sie in den Fig. 27, 28 und 36 angedeutet ist.

Die Sektorenscheibe 374 oder die anderen vorstehend genannten Rotorscheiben sind in äquidistanten
Winkelabständen voneinander rund um die Welle 370 verteilt auf dem Traggerüst befestigt, so daß ein Art Ringwulst entsteht, innerhalb dessen bei lokalen Temperaturänderungen Massenverdichtungen und Massenverdünnungen entstehen. Es besteht auch die Möglichkeit, Sektorenscheiben
374 so anzuordnen, daß die von ihnen im temperaturneutralen
Zustand eingenommene Fläche einen Winkel mit der durch ihren
Mittelpunkt gehenden die Drehachse der Welle 370 enthaltenden
Ebene einschließt.

0008443

<u>Patentansprüche</u>

1. Vorrichtung zur Umwandlung von Wärme in mechanische Energie, mit einem Thermo-Bimetall-Elemente enthaltenden Rotor, dessen Achse senkrecht zu einer Kraftkomponente eines Gravitationsfeldes angeordnet ist, wobei die Bimetall-Elemente in einem Bereich des Rotors durch umzuwandelnde Wärme in einer Richtung verformt und in einem zweiten Bereich durch Abkühlung in Gegenrichtung verformt werden, d a d u r c h   g e k e n n z e i c h n e t ,   daß der Rotor von der Drehachse abstehende speichen- oder stabartige Elemente enthält, die in Ebenen liegen, welche die Drehachse des Rotors enthalten, und daß die speichen- oder stabartigen Elemente in zumindest einem Längsstück aus Thermo-Bimetall-Elementen bestehen.

2. Vorrichtung nach Anspruch 1, d a d u r c h   g e k e n n - z e i c h n e t ,   daß in den Thermo-Bimetall-Elementen die Trennflächen zwischen den beiden Schichten unterschiedlicher thermischer Ausdehnung parallel zur Drehachse verlaufen.

3. Vorrichtung nach Anspruch 1, d a d u r c h   g e k e n n - z e i c h n e t ,   daß in den Thermo-Bimetall-Elementen die Trennflächen zwischen den beiden Schichten unterschiedlicher thermischer Ausdehnung quer zur Drehachse verlaufen.

4. Vorrichtung nach einem der vorstehenden Ansprüche, d a d u r c h   g e k e n n z e i c h n e t, daß die Thermo-Bimetall-Elemente so ausgebildet sind, daß in ihnen die beiden Schichten unterschiedlicher thermischer Ausbildung in sich verdreht sind.

5. Vorrichtung zur Umwandlung von Wärme in mechanische Energie, mit einem Thermo-Bimetall-Elemente enhaltenden Rotor, dessen Achse senkrecht zu einer Kraftkomponente eines Gravitationsfeldes angeordnet ist, wobei die Bimetall-Elemente in einem Bereich des Rotors durch umzuwandelnde Wärme in einer Richtung verformt und in einem zweiten Bereich durch Abkühlung in Gegenrichtung verformt werden, d a d u r c h  g e k e n n - z e i c h n e t,  daß die Thermo-Bimetall-Elemente am äußeren Umfang des Rotors derart angeordnet sind, daß sie in Ebenen liegen, welche die Drehachse enthalten, wobei ihre freien Enden bei Temperaturänderungen durch die Wärmezu- bzw. -abfuhr eine bezüglich der Drehachse radiale und/oder tangentiale Verschiebung erfahren.

6. Vorrichtung nach Anspruch 5, d a d u r c h  g e - k e n n z e i c h n e t,  daß die Thermo-Bimetall-Elemente in ihrem Mittelbereich am äußeren Umfang des Rotors parallel zur Drehachse befestigt sind.

7. Vorrichtung nach Anspruch 5 oder 6, d a d u r c h  g e k e n n z e i c h n e t,  daß die Trennflächen zwischen den beiden Schichten unterschiedlicher thermischer Ausdehnung in den Thermo-Bimetall-Elementen, wenn diese ihre neutrale Lage einnehmen, in Ebenen liegen, welche parallel zur Drehachse verlaufen.

0008443

8. Vorrichtung nach einem der Ansprüche 5 bis 7, dadurch gekennzeichnet, daß die Thermo-Bimetall-Elemente in Form von Schlitzscheiben oder Sternanordnungen ausgebildet sind.

9. Vorrichtung nach einem der vorstehenden Ansprüche, d a d u r c h   g e k e n n z e i c h n e t, daß die speichen- oder stabartigen Elemente bzw. die Bimetall-körper an ihren freien Enden mit Zusatzmassen versehen sind, und/oder daß die Thermo-Bimetall-Elemente mit einer die Energieaufnahme und -abgabe fördernden Oberfläche versehen sind.

10. Vorrichtung nach Anspruch 1 oder 7, g e k e n n z e i c h n e t d u r c h ein wärmeisolierendes Gehäuse, welches den Rotor zumindest in dem für das Erwärmen vorgesehen Bereich umgibt und durch eine Einrichtung zum Einführen der Wärme ins Innere des Gehäuses.

11. Vorrichtung nach einem der vorstehenden Ansprüche, d a d u r c h g e k e n n z e i c h n e t, daß das an den zu kühlenden Bereichen des Rotors vorbeigeführte Wärmeübertragungsfluid von einer Wärmequelle erhitzt und anschließend an den zu erwärmenden Bereichen des Rotors vorbeigeleitet ist.

12. Vorrichtung nach Anspruch 11, d a d u r c h g e k e n n z e i c h n e t, daß der zumindest eine Rotor in einem Gehäuse aufgenommen ist, das durch zumindest eine thermisch isolierende Trennwandung in je eine Warmkammer und eine Kaltkammer unterteilt ist, wobei die Trennwandung so gestaltet ist, daß sie den Durchtritt der einzelnen Rotorbereiche von der Warmkammer in die Kaltkammer und umgekehrt ermöglicht und daß die Warmkammer und/oder die Kaltkammer mit Anschlüssen für die Zuführung und die Abführung von Wärmeübertragungsfluiden versehen sind.

13. Vorrichtung nach einem der vorstehenden Ansprüche, d a d u r c h   g e k e n n z e i c h n e t , daß der zumindest eine Rotor als Fördermittel für das zumindest eine Wärmeübertragungsfluid ausgebildet ist oder Fördermittel für das zumindest eine Wärmeübertragungsfluid antreibt.

14. Vorrichtung nach einem der Ansprüche 10 bis 13, d a d u r c h   g e k e n n z e i c h n e t , daß die Wärmequelle und/oder die Wärmesenke von dem warmen bzw. dem kalten Bereich einer Wärmepumpe gebildet sind.

15.    Vorrichtung nach einem der Ansprüche 10 bis 14, d a d u r c h  g e k e n n z e i c h n e t, daß als Wärmequelle und Wärmesenke zumindest ein Peltierelement dient.

16.    Vorrichtung nach Anspruch 15, d a d u r c h  g e - k e n n z e i c h n e t,  daß auf der Welle zumindest zwei Rotoren angebracht sind, wobei die Thermo-Bimetalle in den speichen- oder stabartigen Elementen je zweier längs der Achse aufeinander folgender Rotoren jeweils um 180$^{\circ}$ gegeneinander verdreht angebracht sind, und daß in einem Bereich zwischen je zwei Rotoren zumindest ein Peltierelement derart angeordnet ist, daß seine kalte Seite dem einen, seine warme Seite dem anderen Rotor zugekehrt ist.

## FIG.1

g

R  M

Md

×$S_R$  ×$S_m$

$F = m \cdot g$

e

## FIG.2

g

R'  N

$m_x \cdot g$  $m_y \cdot g$  $m_y$  $A_y$

Md

$S_x$ ×  × ×  × $S_y$

$S_R$  $S_m$

$m_x$

$A_x$

e'

$r_x$  $r_y$

## FIG.3

3a

5a

1

2-O

4a  6a

## FIG.4

5b

1  3b

4b  2

6b

## FIG.5

5c

3c

2

4c

6c  1

## FIG.6

5d

3d

2

4d

1  6d

FIG.7

2/20

5e

1

3e

2

4e

6e

FIG.8

1

5f

3f

2

4f

6f

FIG.9

8

17

11

14

13

7

1

12

9a

10a

8

16

15

**FIG.10**

**FIG.11**

**FIG.12**

**FIG.13**

**FIG.14**

**FIG.15**

FIG.16

# FIG. 17

kalt (warm) ⟶ ROTOR ⟵ warm (kalt)

t₂ warm

101 97 — 100 96

121

113c 115b 119 116a

123 118 — 115c 116b 113b 115a

XVIII

sehr kalt t₃

115d 114 116c 112 113a 113h Dm

111

125 116d 106 115h 116h

113d 113e 116e 115g

115e 113g

116f 115g 116g

127 113f 115f 120 122

98 94

91 e

102 103

T_Fluide

t₁

t₂

t₃ t₄

L_Wärmetauscher

XVIII

93

124

t₁ heiß

Massenanhebung

Massenabsenkung

6/20

118

126

95 99 kalt t₄

0008443

FIG. 18

# FIG. 19

Massenverdünnung ← | → Massenverdichtung

heiß — 169

163 — $t_1$

142 — 141 — 164 — kühl — $t_2$

165 — 170 Rotor

158h — 159h — 158g — 173 — 176

162 — 159g — 166 — 172 — 175

167 — 158f — 174

158a — 159f — 171

159a — 159e

158e

151 — 159d

157 — 158d

168 — 132

158b — 159c — 136

159b — 158c

143 — e — 140

$T_{Fluid}$

$t_1$

Expansion durch 168

$t_2$

$L_{Wärmetauscher}$

neutrale Temperaturebene

warm (kalt)

kalt (warm)

ROTOR

XX

XX

**FIG. 20**

Zulauf

Ablauf

# FIG. 21

FIG. 22

0008443

# FIG.23

heiß (kalt) → $t_1$

kalt (heiß) → $t_3$

warm → $t_2$

warm → $t_4$

12/20

0008443

FIG. 24

180

192

182
183

184

206
208

heiß
(kalt)
$t_1$

warm
(warm)
$t_2$

197

207
209

warm
(warm)
$t_4$

kalt
(heiß)
$t_3$

185

186
187

$l_1$
202a ....
202n
$l_2$

$L_R$

$T_l$
$T_r$

$t_1$
$t_4$

$t_2$
$t_3$

$L_R$

$l_1$
$l_2$

# FIG. 25

2

238

239

NEG.

NEUTRALE

POS.

240  241  242  248  243  244  245  247  246

# FIG. 26

252  α  260  258  256  NEG.  NEUTR.  POS.  251  2  259  255  257

# FIG. 27

266n-1 · 265n-1 · 263 · 264 · 267 · 266n · 265n · 268 · 265b · 266b · α · 265a · 266a · NEG. · POS.

# FIG. 28

271 · 270 · α · 273 · 272 · 275 · 274 · NEG. · POS.

# FIG. 29

277 · 276 · α

# FIG. 30

278 · α · 279

FIG. 31

FIG. 32

FIG. 33

# FIG. 34

325

322    323    EISKALT    324    333
KÜHL    320    SEHR HEISS    318    +    335
321    319    315    334
1    SEHR HEISS    317
2    316
327    HEISS    330
SEHR KALT    326    ETWAS WARM    329    HEISS
328    331
332

# FIG. 35

361
SEHR HEISS    KALT
346    347    348    357 +    - 358
343    344    HEISS    339
340    1    356
342    338    2    349    2
351    352    345
355    WARM    354
EISKALT
353
350
359
360

FIG.36

$363_2$
$364_2$

$363_1$
$364_1$

$363_n$
$364_n$

XXXVII

XXXVII

362
363a

FIG.37

363a    362

POS.

NEUTR.

$363_{n-1}$

$364_{n-1}$

NEG.

0008443

FIG.38

367

366a

366b

365

368a

367

POS.

368b

NEUTR.

NEG.

0008443

FIG.39

374

373

371 372

370